# EUROPÄISCHE PATENTSCHRIFT

(11) **EP 2 418 431 B1**
(45) Veröffentlichungstag und Bekanntmachung des Hinweises auf die Patenterteilung: **19.05.2021**
(21) Anmeldenummer: 11171752.6
(22) Anmeldetag: 28.06.2011
(51) Int. Cl.: F24F 3/16, F24F 6/14, F04D 19/02, F04D 19/00

(54) **Klimatisierungseinrichtung mit Luftkonditionierungseinrichtung**
Air conditioning system with air conditioning device
Dispositif de climatisation doté d'un dispositif de conditionnement de l'air

(30) Priorität: 02.07.2010 DE 102010017712; 16.07.2010 DE 102010036464
(43) Veröffentlichungstag der Anmeldung: 15.02.2012
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus

(56) Entgegenhaltungen:
- WO-A1-2009/081546
- DE-C2- 4 110 550
- GB-A- 2 139 751
- US-A- 2 195 781
- US-A- 2 218 468
- US-A- 2 338 382

## Beschreibung

Die Erfindung betrifft eine Klimatisierungseinrichtung zum Konditionieren eines in einem Kanal geführten Luftstroms zur Klimatisierung eines Raumes, umfassend eine Luftkonditionierungseinrichtung zum Verändern der physikalischen Parameter der Luft, nämlich der Temperatur und/oder Feuchte, wobei die Luftkonditionierungseinrichtung zum Einen vom Luftstrom durchströmbar ausgebildet ist und hierzu eine Vielzahl von Luftströmungskanälen aufweist und zum Anderen Wärme- oder Kälteübertragungsmittel aufweist zur Beaufschlagung der Luftströmungskanäle mit Wärme oder Kälte, sowie ein Verfahren zum Konditionieren eines in einem Kanal geführten Luftstroms zur Klimatisierung eines Raumes.

Herkömmliche Klimatisierungseinrichtungen bzw. Verfahren, insbesondere zum Befeuchten eines in einem Kanal geführten Luftstroms sind hinlänglich bekannt. Es wird diesbezüglich beispielsweise auf die DE 41 10 550 C2 verwiesen. Die vorbekannten Klimatisierungseinrichtungen zeichnen sich jedoch durch relativ viele Komponenten aus, die die Herstellungs-, Montage- und Wartungskosten sowie auch die Baulänge der Anlage erhöhen. Darüber hinaus sind die bisherigen Anlagen energetisch nicht optimiert und weiterhin oftmals geräuschintensiv GB2139751 offenbart eine Klimaanlage nach dem Oberbegriff des Anspruchs 1.

Die vorliegende Erfindung stellt sich die Aufgabe, eine Klimatisierungseinrichtung sowie ein entsprechendes Verfahren vorzuschlagen, durch die im Hinblick auf die vorgenannten Problempunkte erhebliche Verbesserungen erzielt werden können. Insbesondere stellt sich die vorliegende Erfindung die Aufgabe, eine Klimatisierungseinrichtung zum Konditionieren eines in einem Kanal geführten Luftstroms sowie ein entsprechendes Verfahren vorzuschlagen, die einen energetisch optimierten Betrieb bei gleichzeitiger Geräuschreduktion erlauben.

Zur Lösung dieser Aufgabe wird eine Klimatisierungseinrichtung mit den Merkmalen des Anspruches 1, sowie ein Verfahren mit den Merkmalen des Anspruches 13 vorgeschlagen.

Nach der vorliegenden Erfindung wird damit eine Klimatisierungseinrichtung zum Konditionieren eines in einem Kanal geführten Luftstroms zur Klimatisierung eines Raums vorgeschlagen, welche die Merkmale des Anspruchs 1 umfasst.

Hinsichtlich der Klimatisierungseinrichtung gemäß Anspruch 1 sowie des Verfahrens gemäß Anspruch 13 zum Konditionieren eines in einem Kanal geführten Luftstroms besteht eine Kernüberlegung der Erfindung darin, die Konditionierung mittels einer Luftkonditioniereinrichtung zum multifunktionalen Betrieb vorzunehmen, wobei mindestens ein Wärmezufuhr-Betrieb als auch mindestens ein Wärmeabfuhr-Betrieb vorgesehen sind. Die Luftkonditioniereinrichtung ist also gleichermaßen geeignet, Wärme an einen Luftstrom abzugeben als auch von diesem aufzunehmen.

Damit kann die Luftkonditioniereinrichtung nach einem bevorzugten Gedanken der vorliegenden Erfindung mehrere herkömmlich vorhandene Bauteile ganz oder teilweise ersetzen mit der Folge, dass Herstellungs-, Transport- und Montagekosten sowie die gesamte Baulänge erheblich reduziert werden können.

Weiter zeichnet sich die erfindungsgemäße Klimatisierungseinrichtung dadurch aus, dass diese als kompaktes, zusammenhängendes Bauteil vorgesehen ist, welches zum multifunktionalen Betrieb ausgebildet ist.

Nach einer vorteilhaften Ausbildungsform kann die Luftkonditionierungseinrichtung einen Wärmetauscher umfassen. Der Wärmetauscher erlaubt die Konditionierung der Temperatur des Luftstromes, wobei der Wärmetauscher sowohl in einem Wärme in den Luftstrom eintragenden Betriebszustand, als auch in einem Wärme aus dem Luftstrom austragenden Betriebszustand betrieben werden kann. Weiter erlaubt der Wärmetauscher auch noch die Verdampfung von Wasser, welches sich noch in der flüssigen Phase, etwa in Form von Tröpfchen, in dem Luftstrom befindet. Gleichermaßen kann der Wärmetauscher auch zum Ausscheiden von dampfförmigen Wasser durch Kondensation aus dem Luftstrom vorgesehen sein.

Gemäß einer weiteren vorteilhaften Ausbildungsform kann die Luftkonditionierungseinrichtung einen Befeuchtungsabschnitt umfassen, welcher zur Luftstrombefeuchtung mittels Sprühbefeuchtung ausgebildet ist. Alternativ kann auch eine Befeuchtung mittels Verdunstungsbefeuchtung erfolgen. Der Befeuchtungsabschnitt kann grundsätzlich aufgrund verschiedenster, geeigneter physikalischer Prinzipien arbeiten. So ist beispielsweise ein Feuchteeintrag mittels direkter Wasserverdunstung im Luftstrom, etwa durch die natürliche Verdunstung über einer nassen oder feuchten Fläche möglich. Ferner sind neben einem Befeuchtungseintrag mittels in den Luftstrom eingesprühten Wassers auch eine Befeuchtung mittels Ultraschallgeber zur Oberflächenzerstäubung von Wasser denkbar.

Das hier vorgeschlagene Prinzip der Befeuchtung unter Verwendung des Wärmetauschers im Wärmezufuhr-Betriebszustand ermöglicht eine effektive Auffeuchtung des Luftstroms, so dass gemäß einer Ausgestaltung der vorliegenden Erfindung vorgesehen sein kann, dass der Befeuchtungsabschnitt derart ausgebildet ist, dass der Luftstrom auf eine relative Feuchte von wenigstens 95% oder sogar von wenigstens 98% befeuchtet werden kann. Aufgrund der in diesem Fall hohen aufzuwendenden Verdampfungsenthalpie wird zudem die Umgebungstemperatur abgekühlt und damit die Temperatur des Luftstromes zu einer geringeren Temperatur konditioniert. Folglich kann bei einem Eintrag von einer hohen relativen Feuchte in den Luftstrom gleichzeitig eine Temperaturkonditionierung wie eine Feuchtekonditionierung erfolgen. Überdies erlaubt eine relative Feuchte von wenigstens 95% oder sogar von wenigstens 98% auch Räume mit Feuchtigkeit zu versorgen, in denen typischerweise eine sehr hohe Luftfeuchtigkeit aufrecht erhalten sein muss. Solche Anforderungen sind etwa aus der Lebensmittel-, Tabak- und Druckindustrie bekannt.

Nach einem konkreten, vorteilhaften Aspekt der vorliegenden Erfindung kann die Luftkonditionierungseinrichtung bzw. der Wärmetauscher zunächst integriert einen Tropfenabscheider aufweisen oder als Tropfenabscheider ausgebildet sein bzw. als Tropfenabscheider wirken. Durch eine solche Ausgestaltung wird ein separater Tropfenabscheider entbehrlich, so dass eine erhebliche Kostenreduktion sowie eine kompaktere Bauweise erzielbar sind.

Die Luftkonditionierungseinrichtung bzw. der Wärmetauscher kann erfindungsgemäß - realisiert durch ein einziges Bauteil - eine Mehrfachfunktion übernehmen und zwar dabei je nach Ausgestaltung bis zu vier verschiedene Luftkonditionierfunktionen ermöglichen und darüber hinaus bei entsprechender Ausgestaltung noch einen Entkeimungsbetrieb erlauben. Im Entkeimungsbetrieb kann insbesondere bei reduziertem, abgeschalteten oder umgepolten, d.h. entgegen der ursprünglichen Richtung gerichteten Luftstrom die befeuchteten oder nassen Flächen an den Oberflächen sowie ggf. auch umliegender Bauteile, wie einer Bodenwanne und/oder Ablaufrinne so stark erhitzt werden, dass diese Flächen innerhalb kürzester Zeit trocknen und so eine Keimbildung verhindert ist bzw. etwaig vorhandene Keime auch abgetötet werden.

Sofern die durch Aufheizung der befeuchteten oder nassen Flächen entstandene Feuchtigkeit aus dem Luftkanal 50 ausgetragen werden soll, so kann dies über die noch näher zu beschreibende Ventilatoreneinheit beispielsweise dergestalt erfolgen, dass die durch den Entkeimungsschritt befeuchtete Luft in den Raum ausgeblasen wird. Eine andere, möglicherweise bevorzugte Alternative besteht darin, die Ventilatoreneinheit in einem umgepolten Betriebsmodus ggf. auch nur mit geringer Drehzahl zu betreiben, um so die feuchte Luft entgegen der normalen Fließrichtung des Luftstroms aus dem Gebäude auszutragen.

Hinsichtlich der Konditionierung des Luftstroms kann neben der bereits erwähnten Befeuchtung eine Aufheizung des Luftstroms - bei abgeschaltetem Befeuchtungsabschnitt -, eine Abkühlung des Luftstroms - bei abgeschaltetem Befeuchtungsabschnitt - oder eine Entfeuchtung des Luftstroms - bei abgeschaltetem Befeuchtungsabschnitt - erfolgen.

Zur Abkühlung des Luftstroms bzw. zur Entfeuchtung des Luftstroms wird die Luftkonditionierungseinrichtung bzw. der Wärmetauscher mit einem Kältefluid, d.h. einem Kälteübertragungsmittel beschickt. Zur Aufheizung des Luftstroms, zur Nachverdunstung von im Luftstrom mitgerissener Befeuchtungspartikel und zur Abtrocknung befeuchteter oder nasser Flächen (Entkeimungsbetrieb) wird die Luftkonditionierungseinrichtung bzw. der Wärmetauscher mit einem Wärmefluid, d.h. einem Wärmeübertragungsmittel beschickt. Bei dem Wärmefluid kann es sich beispielsweise um Wasser, Heißgas bzw. das in einer Wärmepumpe umlaufende Fluid handeln. Darüber hinaus ist es denkbar, unmittelbar eine Wärmepumpe anzuschließen, das heißt den Wärmetauscher mit dem Wärmefluid der Wärmepumpe zu beschicken.

In einer besonders bevorzugten Ausgestaltung ist zur Nachverdunstung von im Luftstrom mitgerissener Befeuchtungspartikel und/oder zur Aufheizung des Luftstroms die Beschickung der Luftkonditionierungseinrichtung bzw. des Wärmetauschers mit einem Wärmefluid so getroffen, dass das Wärmefluid die Luftkonditionierungseinrichtung bzw. den Wärmetauscher in Strömungsrichtung des Luftstroms durchfließt. Dadurch ist die dem eintretenden Luftstrom zugewandte Seite der Luftkonditionierungseinrichtung bzw. des Wärmetauschers stärker erhitzt, so dass dort auftreffende Befeuchtungspartikel relativ rasch und effizient verdunstet werden.

Bevorzugtermaßen ist dagegen bei Abkühlung des Luftstroms (Kühlbetrieb) und/oder bei Entfeuchtung des Luftstroms (Entfeuchtungsbetrieb) die Beschickung der Luftkonditionierungseinrichtung bzw. des Wärmetauschers mit Kältefluid so getroffen, dass das Kältefluid die Luftkonditionierungseinrichtung bzw. den Wärmetauscher entgegen der Strömungsrichtung des Luftstroms durchfließt.

In einer bevorzugten Ausgestaltung ist die Luftkonditionierungseinrichtung bzw. dem Wärmetauscher eingangs- oder ausgangsseitig ein Mischventil, insbesondere Drei-Wege-Ventil oder Vier-Wege-Ventil zugeordnet, um die Zuführung heißen Wärmefluids bzw. Kältefluids zur Einstellung einer gewünschten Vorlauftemperatur mit einem einstellbaren Anteil an Umlauffluid zu mischen. Die Luftkonditionierungseinrichtung bzw. der Wärmetauscher kann bei dieser Ausgestaltung wahlweise ausschließlich mit aus einer Wärmefluidquelle entnommenem heißen Fluid der Temperatur T_{H} oder ausschließlich Kältefluid aus einer Kältequelle der Temperatur T_{L} zugeführt werden. Durch Beimischung von Umlauffluid lässt sich eine gegenüber T_{H} geringere Temperatur im Vorlauf bzw. eine gegenüber T_{L} höhere Temperatur im Vorlauf mischen. Zu diesem Zweck ist das Mischventil bzw. das Drei-Wege-Ventil bzw. Vier-Wege-Ventil bevorzugtermaßen mit einem Stellantrieb ausgestattet, so dass sich durch Abgleich mit der tatsächlichen Ist-Temperatur T_{Ist} im Vorlauf, die über einen Sensor im Vorlauf ermittelt wird, das gewünschte Mischungsverhältnis am Mischventil einstellen bzw. regeln lässt.

Nach einem weiter bevorzugten Aspekt umfasst die Klimatisierungseinrichtung weiterhin eine vorzugsweise in ihrer Förderleistung einstellbare Wärmetauscherpumpe, um das Wärme- bzw. Kältefluid durch die Luftkonditionierungseinrichtung bzw. den Wärmetauscher zu pumpen. Durch das Vorsehen einer Wärmetauscherpumpe kann die Fließgeschwindigkeit des Wärme- bzw. Kältefluids genau eingestellt werden. Sofern die Wärmetauscherpumpe selbst, beispielsweise über einen Frequenzumrichter in ihrer Förderleistung einstellbar ist, lässt sich auch die Fließgeschwindigkeit des Wärme- bzw. Kältefluids variieren und bedarfsgerecht auf einen jeweils gewünschten Wert einstellen.

Gemäß einer weiteren vorteilhaften Ausführungsform kann vorgesehen sein, dass die Luftströmungskanäle thermisch leitendes Material mit einem Leitfähigkeitskoeffizienten von wenigstens 50 W/(m·K), insbesondere Kupfer und/oder Aluminium umfassen. Damit wird ein effizienter Wärmeaustausch gewährleistet. Im Falle von Kupfer hat das Metall zudem auch noch antibakterielle Wirkungen, welche vor allem einem ungewünschten Keimbefall des Wärmetauschers entgegen wirken können.

Gemäß einer ebenfalls vorteilhaften Ausführungsform kann vorgesehen sein, dass die Kontaktflächen der Luftströmungskanäle zum Wärmeaustausch mit dem Luftstrom ausreichend groß sind, um eine Kühlung eines Luftstroms vorbestimmter relativer Feuchte auch bei Temperaturen des Kühlfluids oberhalb des Taupunktes gewährleisten zu können. Gemäß der aus dem Stand der Technik bekannten Klimatisierungseinrichtungen weist das Kühlfluid zur Kühlung eines Wärmetauschers eine Temperatur auf, welche deutlich unterhalb des Taupunktes oder des Taupunktbereiches des zu kühlenden Luftstromes liegt, typischerweise zwischen 6°C und 12°C. Der Grund für die geringen Temperaturen im Betrieb ist zunächst darin zu sehen, dass eine Kühlung des Luftstromes mit einer zunehmenden Differenz zwischen der Temperatur des Luftstroms und der des Kühlfluids zunehmend effizienter erfolgen kann, d.h. die abgegebene Kühlleistung pro Fläche eines Luftströmungskanals gesteigert werden kann, wenn die Differenz vergrößert wird. Durch einen Kühlvorgang bei Temperaturen unterhalb des Taupunktes oder des Taupunktbereiches des zu kühlenden Luftstromes kann es jedoch wenigstens lokal zur Kondensation des in dem Luftstrom befindlichen Wasserdampfes kommen, welche den Energiebetrag der Verdampfungsenthalpie freisetzt. Dieser Energiebetrag erfordert damit jedoch eine erhöhte Kühlleistung, welche ausschließlich dazu dient, den Phasenübergang des Wassers aus der Dampfphase in die flüssige Phase herbeizuführen. Eine Temperaturänderung erfolgt während dieses Phasenübergangs nicht.

Ausführungsgemäß sind nun die Kontaktflächen der Luftströmungskanäle zum Wärmeaustausch mit dem Luftstrom ausreichend groß, um auch eine genügende Kühlung oberhalb des Taupunktes bzw. des Taubereiches gewährleisten zu können, da dem Luftstrom bei seinem Weg durch die Luftströmungskanäle genügend Energie entzogen werden kann, wobei es nicht zu einer Kondensation des Wasserdampfes in dem Luftstrom kommt. Damit braucht die Verdampfungsenthalpie energetisch nicht aufgewendet zu werden, wodurch eine effizientere Gesamtkühlung des Luftstroms resultiert. Zudem fallen geringere Kosten für die Kühlung an. Weiterhin weist die gekühlte Luft eine unveränderte absolute Feuchte auf, so dass auch auf eine nachgeschaltete, erneute Befeuchtung verzichtet werden kann. Typische Temperaturen des Kühlfluids der ausführungsgemäßen Anordnung liegen zwischen 12°C und 18°C.

In einer konkreten Ausgestaltung der Luftkonditionierungseinrichtung sind bzw. des Wärmetauschers sind die Luftströmungskanäle durch parallel zueinander angeordnete Blechlagen definiert, die jeweils parallel zur Strömungsrichtung des Luftstroms ausgerichtet sind. Hierdurch wird einerseits eine hohe Wärmeübertragungsrate sichergestellt, andererseits aber dem Luftstrom ein vergleichsweise nur geringer Widerstand entgegengesetzt. Bevorzugtermaßen sind die Blechlagen voneinander mindestens um 1 mm, höchstens jedoch um 5 mm beabstandet.

Die Temperierkanäle können in einer bevorzugten Ausgestaltung durch eine Mehrzahl von entlang der Strömungsrichtung des Luftstroms mäanderförmig verlaufender Rohre definiert sein, wobei die Mehrzahl der senkrecht zur Strömungsrichtung des Luftstroms ausgerichteten Rohrabschnitte mindestens 4, vorzugsweise mindestens 8, weiter vorzugsweise mindestens 18 beträgt.

Obwohl im Befeuchtungsbetrieb bereits ein relativ kalter Luftstrom von z. B. nur 5° C bis 8° C bereits durch das hier vorgeschlagene Konzept effektiv und darüber hinaus auch vom Feuchteeintrag her sehr genau befeuchtet werden kann, können gerade im Winter Situationen auftreten, bei denen eine Vorlufterwärmung wenigstens auf ein Temperaturniveau von 5° C bis 8° C notwendig erscheint. Hierzu ist nach einer bevorzugten Weiterbildung der vorliegenden Erfindung eine vorgelagerte Vorlufterwärmungseinrichtung vorgesehen. Bei dieser Vorlufterwärmungseinrichtung kann es sich insbesondere um eine Umluftbeimischeinrichtung, eine Wärmerückgewinnungseinrichtung oder ein anderweitig aufheizbares Heizregister zur bedarfsweisen Vorerwärmung des Luftstroms handeln. Mittels einer Umluftbeimischeinrichtung lässt sich ein gewisser Anteil von Raumluft erneut der Zuluft beimengen. Die entnommene Raumluft ist üblicherweise auf einem Temperaturniveau im Bereich von 20° C bis 23° C, so dass durch Beimischung dieser warmen Luft zur zugeführten kalten Außenluft sich das angestrebte Temperaturniveau von 5° C bis 8° C relativ leicht erreichen lässt.

Es wird klargestellt, dass die hier angesprochene Vorlufterwärmung über die hier angesprochene Vorlufterwärmungseinrichtung für den Befeuchtungsbetrieb notwendig ist. Wird die Klimatisierungseinrichtung zeitweise nicht im Befeuchtungsbetrieb gefahren, muss auch die Vorlufterwärmungseinrichtung nicht betrieben werden. Ist die Klimatisierungseinrichtung für Anwendungsfälle vorgesehen, in denen ein Befeuchtungsbetrieb ohnehin nicht in Betracht kommt, erscheint es zweckmäßig, die Vorlufterwärmungseinrichtung wegzulassen, da sie dann nicht benötigt wird. Dies reduziert Herstellungs- und Montageaufwand sowie den Energiebedarf im Betrieb der Anlage.

Mittels einer Wärmerückgewinnungseinrichtung kann, beispielsweise über einen Kreuzwärmetauscher, der aus dem Raum nach außen abgegebenen Abluft Wärme entzogen und diese Wärme an die zugeführte Außenluft übertragen werden, um einen Zuluftstrom auf einem Temperaturniveau von 5° C bis 8° C zu gewährleisten. Selbstverständlich kann auch ein anderweitig aufheizbares Heizregister vorgesehen sein, das beispielsweise auch mit ohne abzukühlendem Prozessfluid oder anderweitig verfügbarer Abwärme beheizt werden kann. Notfalls kann das anderweitig aufheizbare Heizregister aber auch separat, beispielsweise durch ein Wärmefluid aus einer Wärmequelle, elektrisch oder durch Erwärmung mittels fossiler Brennstoffe beheizt werden.

In einer fakultativen möglichen, in vielerlei Hinsicht höchst interessanten Ausführungsvariante bilden Düsenstock und Wärmetauscher ein vormontierbares Modul aus, das in einen Luftkanal geeigneten Querschnitts einsetzbar ist. Hierdurch können beide Elemente herstellerseits zu einer Einheit vormontiert und dabei in besonders günstiger Weise aufeinander abgestimmt werden. Hierdurch lassen sich Herstellungs- und Montagekosten weiter verringern.

In einer weiteren möglichen Ausgestaltung ist abstromseitig der Luftkonditionierungseinrichtung bzw. des Wärmetauschers eine Nachwärmeinrichtung angeordnet zur bedarfsweisen Nachwärmung des Luftstroms, insbesondere im Entfeuchtungsbetrieb.

Nach einem weiterhin bevorzugten Aspekt ist die Nachwärmeinrichtung zur Montage außerhalb des Kanals, insbesondere im Teilstromprinzip, also parallel zum im Kanal geführten Luftstrom, ausgebildet. In dieser Ausgestaltung behindert die Nachwärmeinrichtung in den übrigen Betriebsmodi, also im Befeuchtungsbetrieb, Heizbetrieb und Kühlbetrieb sowie im Entkeimungsbetrieb nicht den im Kanal geführten Luftstrom, so dass die Gesamtenergiekosten der Anlage weiter verringert werden können, zumal die Nachwärmeinrichtung im Normalfall nur im Entfeuchtungsbetrieb in Betracht gezogen wird und der Entfeuchtungsbetrieb einen verglichen zu den anderen Betriebsmodi eher seltenen Betriebsmodus darstellt.

In einer bevorzugten Ausgestaltung weist der Wärmetauscher in Strömungsrichtung des Luftstroms eine Ausdehnung zwischen 200 mm und 800 mm, insbesondere zwischen 300 mm und 600 mm auf. Eine solche Länge hat sich in praktischen Versuchen als sinnvoll erwiesen.

Die Gesamtlänge einer Klimatisierungseinrichtung, die neben der Luftkonditionierungseinrichtung auch eine Ventilatoreneinheit sowie eine Vorlufterwärmungseinrichtung sowie eine Nachwärmeinrichtung aufweisen kann, kann von der Eintrittsseite der Vorlufterwämungseinrichtung bis zur Austrittsseite der Nachwärmeinrichtung eine Länge in Kanallängserstreckung von weniger als 3 m, vorzugsweise weniger als 2 m aufweisen, so dass auch eine derartige Gesamtanlage herstellerseits vormontiert, ggf. herstellerseits ausgetestet und als völlig betriebsbereite Anlage am Einsatzort in Betrieb genommen werden kann. Aufgrund der relativ geringen Längserstreckung in Kanalrichtung ist der bauseits vorzusehende Platzbedarf deutlich verringert. Es kommen daher auch andere Einbausituationen bzw. sogar Einbaulagen in Betracht; neben der bislang relativ üblichen horizontalen Ausrichtung des Kanals wären auch vertikale Aufstellungen denkbar, wobei in diesem Fall bevorzugterweise der Luftstrom in Gravitationsrichtung nach unten gerichtet sein sollte.

Gemäß einem vorteilhaften Aspekt weist die Konditionierungseinrichtung bevorzugtermaßen eine gesamte Baulänge in Luftströmungsrichtung von weniger als 1.400 mm, vorzugsweise weniger als 1.000 mm, besonders bevorzugt von weniger als 800 mm auf. Es wird insofern ein sehr kompaktes Bauteil ermöglicht, das dem Luftstrom einen vergleichsweise geringen Widerstand bietet, wobei gleichzeitig die verschiedenen Betriebs- bzw. Funktionszustände des multifunktionalen Betriebes umgesetzt werden können.

Weiterhin kann in einer fakultativen Weiterbildung der Luftkonditionierungseinrichtung vorgeschaltet über eine freie Befeuchtungsstrecke x beabstandet ein Düsenstock angeordnet sein, der eine Mehrzahl von über den Querschnitt des Kanals verteilt angeordneter, mit Druckwasser beaufschlagter Düsen zur Abgabe von Wasser, insbesondere in Form eines Sprühnebels, umfasst. Ein Düsenstock kann hierbei die Funktion von aus dem Stand der Technik bekannten Befeuchtungseinrichtungen wie Befeuchtungswaben oder Befeuchtungsgeweben erfüllen, erlaubt jedoch gleichzeitig einen hygienischen Betrieb. Sammeln sich nämlich in den bekannten Waben oder Befeuchtungsgeweben über längere Betriebszeiten Bakterien sowie weitere Krankheitserreger an, so kann die Oberfläche des Düsenstocks stets soweit rein gehalten werden, dass eine Beeinträchtigung der Gesundheit von Benutzern der Klimatisierungseinrichtung ausgeschlossen werden kann. Die Reinerhaltung erfolgt etwa durch eine geeignete Oberflächeglätte, so dass sich darauf keine Krankheitserreger festsetzen können.

Bevorzugtermaßen ist eine Befeuchtungsstrecke, über welche in den Luftstrom Wasser abgegeben wird, vergleichsweise kurz bemessen, und beträgt weniger als 900 mm, vorzugsweise weniger als 800 mm, besonders bevorzugt etwa 500 mm bis 600 mm. Während es beim Stand der Technik notwendig war, den Luftstrom wenigstens größtenteils über die Befeuchtungsstrecke mit dem Befeuchtungsfluid zu versehen, das Befeuchtungsfluid also innerhalb der freien Befeuchtungsstrecke vom Luftstrom aufgenommen werden musste, beruht ein Gedanke der vorliegenden Erfindung auf einer Abkehr von diesem Prinzip, nämlich, dass ein wesentlicher, unter Umständen auch der Hauptanteil der Zuführung von Befeuchtung an den Luftstrom nicht innerhalb der freien Befeuchtungsstrecke verfolgen braucht, sondern innerhalb der Luftkonditionierungseinrichtung selbst vorgenommen werden kann, die weiter vorzugsweise, in einem besonderen Betriebszustand auf einfache und mehr oder weniger automatische Weise zuverlässig entkeimt werden kann.

Nach einem besonders bevorzugten Aspekt der vorliegenden Erfindung ist die Luftbefeuchtungseinrichtung mindestens zum Entfeuchten des Luftstroms (Entfeuchtungsbetrieb) und/oder zur Abkühlung des Luftstroms (Kühlbetrieb) sowie gleichzeitig zur Austrocknung befeuchteter oder nasser Flächen (Entkeimungsbetrieb) ausgebildet, um im Kühlbetrieb bzw. im Entfeuchtungsbetrieb die gegebene Feuchte bzw. nasse Flächen an der Luftkonditionierungseinrichtung selbst bzw. ihrem Umfeld, insbesondere auch eine zugeordnete Wasserablauffläche, insbesondere durch Erwärmung vollständig abtrocknen und hierdurch entkeimen zu können.

Nach einem weiteren Aspekt der vorliegenden Erfindung ist unterhalb der Luftkonditionierungseinrichtung eine Wasserablauffläche angeordnet, die mit einem Ablauf, insbesondere einer Ablaufrinne, zusammenwirkt. Weiter vorzugsweise ist die Anordnung so getroffen, dass die Wasserablauffläche derart mit der Luftkonditionierungseinrichtung zusammenwirkt, dass im Entkeimungsbetrieb die Wasserablauffläche abgetrocknet, insbesondere vollständig abgetrocknet wird.

In einer möglichen Ausgestaltung ist die Wasserablauffläche sich sowohl unterhalb der Luftkonditionierungseinrichtung als auch unterhalb des Düsenstocks erstreckend ein- oder mehrteilig zusammenhängend ausgebildet.

Bei einer vorteilhaften Ausführungsform der Klimatisierungseinrichtung nach der vorliegenden Erfindung kann der Wärmetauscher integriert einen Tropfenabscheider aufweisen oder als Tropfenabscheider ausgebildet sein bzw. als Tropfenabscheider wirken.

Bevorzugtermaßen ist die Luftkonditionierungseinrichtung bzw. der Wärmetauscher derart ausgebildet bzw. derart an einer Wärme- und Kältequelle angeschlossen, dass mindestens zwei, vorzugsweise mindestens drei, weiter vorzugsweise vier, besonders bevorzugt alle bereits genannten Funktionen
- Nachverdunstung von im Luftstrom mitgerissener Befeuchtungspartikel (Befeuchtungsbetrieb) und/oder
- Aufheizen des Luftstroms (Heizbetrieb) und/oder
- Abtrocknung befeuchteter oder nasser Flächen (Entkeimungsbetrieb) und mindestens einen Wärmeabfuhr-Betriebszustand, beispielsweise
- Abkühlung des Luftstroms (Kühlbetrieb) und/oder
- Entfeuchtung des Luftstroms (Entfeuchtungsbetrieb),
durch die Luftkonditionierungseinrichtung bzw. den Wärmetauscher ausgeübt werden können.

Nach einem weiter bevorzugten Aspekt der vorliegenden Erfindung ist zur Nachverdunstung von im Luftstrom mitgerissener Befeuchtungspartikel und/oder zur Aufheizung des Luftstroms die Beschickung mit einem Wärmefluid so getroffen, dass das Wärmefluid die Luftkonditionierungseinrichtung bzw. den Wärmetauscher in Strömungsrichtung des Luftstroms durchfließt.

Nach einem ebenfalls bevorzugten Aspekt der vorliegenden Erfindung ist zur Abkühlung des Luftstroms und/oder zur Entfeuchtung des Luftstroms die Beschickung mit einem Kältefluid so getroffen, dass das Kältefluid die Luftkonditionierungseinrichtung bzw. den Wärmetauscher entgegen der Strömungsrichtung des Luftstroms durchfließt.

In einer bevorzugten Ausgestaltung ist der Luftkonditionierungseinrichtung bzw. dem Wärmetauscher eingangs- oder ausgangsseitig ein Mischventil, insbesondere Drei-Wege-Ventil oder Vier-Wege-Ventil zugeordnet, um die Zuführung heißen Wärmefluids bzw. Kältefluids zur Einstellung einer gewünschten Vorlauftemperatur mit einem einstellbaren Anteil an Umlauffluid zu mischen. Die Luftkonditionierungseinrichtung bzw. der Wärmetauscher kann bei dieser Ausgestaltung wahlweise ausschließlich mit aus einer Wärmefluidquelle entnommenem heißen Fluid der Temperatur T_{H} oder ausschließlich Kältefluid aus einer Kältequelle der Temperatur T_{L} zugeführt werden. Durch Beimischung von Umlauffluid lässt sich eine gegenüber T_{H} geringere Temperatur im Vorlauf bzw. eine gegenüber T_{L} höhere Temperatur im Vorlauf mischen. Zu diesem Zweck ist das Mischventil bzw. das Drei-Wege-Ventil bzw. Vier-Wege-Ventil bevorzugtermaßen mit einem Stellantrieb ausgestattet, so dass sich durch Abgleich mit der tatsächlichen Ist-Temperatur T_{Ist} im Vorlauf, die über einen Sensor im Vorlauf ermittelt wird, das gewünschte Mischungsverhältnis am Mischventil einstellen bzw. regeln lässt.

Nach einem weiter bevorzugten Aspekt umfasst die Klimatisierungseinrichtung weiterhin eine vorzugsweise in ihrer Förderleistung einstellbare Wärmetauscherpumpe, um das Wärme- bzw. Kältefluid durch den Wärmetauscher zu pumpen. Durch das Vorsehen einer dem Wärmetauscher zugeordneten Wärmetauscherpumpe kann die Fließgeschwindigkeit des Wärme- bzw. Kältefluids genau eingestellt werden. Sofern die Wärmetauscherpumpe selbst, beispielsweise über einen Frequenzumrichter in ihrer Förderleistung einstellbar ist, lässt sich auch die Fließgeschwindigkeit des Wärme- bzw. Kältefluids variieren und bedarfsgerecht auf einen jeweils gewünschten Wert einstellen.

In einer konkreten Ausgestaltung des Wärmetauschers sind die Luftströmungskanäle durch parallel zueinander angeordnete Blechlagen definiert, die jeweils parallel zur Strömungsrichtung des Luftstroms ausgerichtet sind. Hierdurch wird einerseits eine hohe Wärmeübertragungsrate sichergestellt, andererseits aber dem Luftstrom ein vergleichsweise nur geringer Widerstand entgegengesetzt. Bevorzugtermaßen sind die Blechlagen voneinander mindestens um 1 mm, höchstens jedoch um 5 mm beabstandet.

In einer fakultativen möglichen, in vielerlei Hinsicht höchst interessanten Ausführungsvariante bilden Düsenstock und Wärmetauscher ein vormontierbares Modul etwa im Sinne einer Luftkonditionierungseinrichtung aus, das in einen Luftkanal geeigneten Querschnitts einsetzbar ist. Hierdurch können beide Elemente herstellerseits zu einer Einheit vormontiert und dabei in besonders günstiger Weise aufeinander abgestimmt werden. Hierdurch lassen sich Herstellungs- und Montagekosten weiter verringern.

Gemäß einem weiteren Aspekt der Erfindung, kann in einer Ausführungsform die Klimatisierungseinrichtung eine Bodenwanne aufweist, in welcher im Kühlbetrieb in der Luftkonditionierungseinrichtung bzw. im Wärmetauscher kondensiertes und abgeschiedenes Wasser aufgefangen und/oder aus welcher dieses Wasser abgeleitet werden kann. Damit können einerseits eine gezielte Reinigung bzw. Wartung gewährleistet werden und andererseits kann das abgeschiedene Wasser über nur geringe Wegstrecken geeignet ausgeleitet und anschließend möglicherweise aufgefangen werden.

Nach der vorliegenden Erfindung wird auch ein Verfahren zum Konditionieren eines in einem Kanal geführten Luftstroms zur Klimatisierung eines Raums vorgeschlagen, wobei der Luftstrom innerhalb einer Luftkonditionierungseinrichtung in seinen physikalischen Parametern, nämlich hinsichtlich der Temperatur (T) und/oder hinsichtlich der Feuchte (A) verhindert wird, wobei sich die Luftkonditionierungseinrichtung in verschiedenen auswählbaren Betriebszuständen betreiben lässt, wobei ein Betrieb mindestens einen Wärmezufuhr-Betriebszustand, in dem dem Luftstrom Wärme zugeführt wird und mindestens einen Wärmeabfuhr-Betriebszustand, in dem dem Luftstrom Wärme entnommen wird, umfasst, wobei der Wärmezufuhr-Betriebszustand beispielsweise
- Nachverdunstung von im Luftstrom mitgerissener Befeuchtungspartikel (Befeuchtungsbetrieb) und/oder
- Aufheizen des Luftstroms (Heizbetrieb) und/oder
- Abtrocknung befeuchteter oder nasser Flächen (Entkeimungsbetrieb) und der Wärmeabfuhr-Betriebszustand beispielsweise die Betriebsfunktionen
- Abkühlung des Luftstroms (Kühlbetrieb) und/oder
- Entfeuchtung des Luftstroms (Entfeuchtungsbetrieb)
umfasst.

Es kann bei dem vorstehend wiedergegebenen Verfahren zudem eine vorgelagerte Besprühung des Luftstroms mit Druckwasser vorgesehen oder aber auch weggelassen sein.

Nach einem bevorzugten Aspekt des Verfahrens wird die Aufheizung in einem Wärmetauscher vorgenommen, der gleichzeitig als Tropfenabscheider wirkt.

Nach einem besonders bevorzugten Aspekt der vorliegenden Erfindung wird zur Nachverdunstung von dem Luftstrom mitgerissener Befeuchtungspartikel (Befeuchtungsbetrieb) und/oder zur Aufheizung des Luftstroms (Heizbetrieb) die Beschickung der Luftkonditionierungseinrichtung bzw. des Wärmetauschers mit Wärmefluid in Strömungsrichtung des Luftstroms vorgenommen. Hierdurch trifft der relativ kalte mit Befeuchtungspartikeln beladene Luftstrom eingangsseitig auf einen dort relativ heißen Wärmetauscher, so dass eine effektive Verdunstung von der Eintrittsseite des Luftstroms realisiert wird.

Nach einem ebenfalls bevorzugten Aspekt der vorliegenden Erfindung wird zur Abkühlung des Luftstroms (Kühlbetrieb) und/oder zur Entfeuchtung des Luftstroms (Entfeuchtungsbetrieb) die Beschickung der Luftkonditionierungseinrichtung bzw. des Wärmetauschers mit einem Kältefluid entgegen der Strömungsrichtung des Luftstroms vorgenommen. Im Kühlbetrieb bzw. Entfeuchtungsbetrieb wird also im Gegenstromprinzip beschickt.

Nach einem weiterhin bevorzugten Aspekt des vorliegenden Verfahrens wird dem Wärmefluid bzw. dem Kältefluid ein einstellbarer Anteil an Umlauffluid beigemischt, um eine jeweils gewünschte Vorlauftemperatur zu erzielen bzw. aufrechtzuerhalten.

Die Fließgeschwindigkeit des Wärme- und/oder Kältefluids durch die Temperierkanäle ist bevorzugtermaßen einstellbar, weiter vorzugsweise in einem Fließgeschwindigkeitsbereich von 0,5 m/s bis 10 m/s, insbesondere von 0,5 m/s bis 8 m/s und vorzugsweise von 0,5 m/s bis 5 m/s.

Nach einem weiteren Aspekt der vorliegenden Erfindung wird im Entfeuchtungsbetrieb der entfeuchtete Luftstrom im Vollstrom- oder im Teilstromprinzip nacherwärmt. Das letztgenannte Teilstromprinzip bietet bei entsprechender Auslagerung der Nacherwärmung den Vorteil, dass der Luftstrom ansonsten in anderen Betriebsmodi (Befeuchtungsbetrieb, Heizbetrieb, Kühlbetrieb, Entkeimungsbetrieb) nicht behindert ist.

Nach einem weiteren, vorteilhaften Aspekt der vorliegenden Erfindung wird die Eingangstemperatur des Luftstroms vor der Luftkonditionierungseinrichtung bzw. dem Wärmetauscher im Befeuchtungsbetrieb, bzw. wenn ein oder mehrere Düsenstöcke zur Befeuchtung des Luftstromes vorgesehen sind, mindestens auf einem Mindesttemperaturniveau von z. B. 5° C bis 8° C gehalten; liegt die Temperatur der Außenluft unterhalb dieses Mindesttemperaturniveaus, werden Maßnahmen zur Vorerwärmung des Luftstroms getroffen, so dass das Mindesttemperaturniveau von z. B. 5° C bis 8° C nicht unterschritten wird.

Nach einem bevorzugten Aspekt der vorliegenden Erfindung lässt sich die Mindesttemperatur von z. B. 5° C bis 8° C insbesondere im Winter durch eine oder eine Kombination der folgenden Maßnahmen erzielen:
- Nutzung der Abwärme der Ventilatoren
- Wärmerückgewinnung aus der das Gebäude verlassenen Abluft oder aus anderweitig anfallender Abwärme
- Beimischung von Umluft
- Aufheizung durch ein Heizregister.

Das erfindungsgemäße Verfahren sieht bevorzugtermaßen in einem weiteren Betriebsmodus auch einen Entkeimungsschritt vor, bei dem insbesondere bei reduzierter, abgeschalteter oder umgepolter Luftströmung der Luftkonditionierungseinrichtung bzw. der Wärmetauscher auf eine Entkeimungstemperatur zur Abtrocknung, vorzugsweise auch eines unter der Luftkonditionierungseinrichtung bzw. dem Wärmetauscher angeordneten Bodens und/oder einer Ablaufrinne erhitzt wird. Der Entkeimungsschritt wird vorzugsweise in festgelegten Intervallen, beispielsweise einmal täglich nach Betriebsschluss durchgeführt, so dass eine Keimbildung, die dann zu befürchten wäre, wenn sich die befeuchteten oder nassen Flächen nicht trocknen ließen, vermieden wird. Beispielsweise könnte der Entkeimungsschritt eine Beschickung der Luftkonditionierungseinrichtung bzw. des Wärmetauschers mit einem Wärmefluid von 80° C über einen Zeitraum von 10 Minuten bis 15 Minuten vorsehen, wobei letztendlich ein so hoher Wärme- bzw. Energieeintrag sichergestellt sein muss, dass die befeuchteten oder nassen Flächen restlos abgetrocknet werden.

Weiterhin ist es etwa in Kombination mit den vorbeschriebenen Ausführungsformen der Klimatisierungseinrichtung denkbar,dass eine Ventilatoreneinheit zur Beförderung eines bzw. des in einem Kanal geführten Luftstroms vorgesehen ist, wobei der Luftstrom strömungstechnisch vor oder nach der Ventilatoreneinheit mit Druckwasser, insbesondere mittels einer Klimatisierungseinrichtung wie vorstehend erläutert, befeuchtet wird, wobei die Ventilatoreneinheit eine Mehrzahl von Axialventilatoren umfasst und wobei mindestens zwei Axialventilatoren strömungstechnisch hintereinander geschaltet angeordnet sind. Dieses Prinzip kann sowohl in klimatechnischen Anlagen allgemein, als auch unabhängig von einer Zuluftbefeuchtung, also beispielsweise in einem Abluftkanal zur Abführung von Abluft aus einem klimatisierten Raum, eingesetzt werden. Darüber hinaus ist dieses Prinzip auch nicht auf klimatechnische Anlagen beschränkt, sondern kann in diesem Fall wiederum in Kombination mit der bereits erwähnten Befeuchtung des Luftstroms vor oder nach der Ventilatoreneinheit zur Kühlung eines zu kühlenden Fluids, beispielsweise eines Prozessfluids, eingesetzt werden.

Es hat sich überraschenderweise gezeigt, dass durch die Hintereinanderschaltung von zwei oder mehr Axialventilatoren ein Luftstrom mit jeweils gewünschter Luftgeschwindigkeit von z. B. 2,5 m/s angetrieben werden kann, wobei die Axialventilatoren bei Hintereinanderschaltung mit - im Vergleich zum Vorsehen nur eines Axialventilators in Strömungsrichtung - deutlich reduzierter Drehzahl betrieben werden können. Hierdurch wird die Geräuschentwicklung entscheidend verringert. Darüber hinaus haben erste Versuche auch Hinweise dafür ergeben, dass die Qualität des erzeugten Luftstroms, der einem laminaren Luftstrom möglichst nahe kommt und möglichst wenig Verwirbelungen ausbilden soll, erheblich verbessert ist.

Die Hintereinanderschaltung der Axialventilatorener wirkt - bei der Hintereinanderschaltung von zwei Axialventilatoren eine deutliche Erhöhung des Förderdrucks gegenüber dem Vorsehen nur eines einzigen Ventilators, nämlich um den Faktor 2. Durch die Hintereinanderschaltung wird insofern der Druck deutlich erhöht, so dass mehr Volumen gefördert wird. Bei einem vorgegebenen bzw. gewünschten Volumenstrom lässt sich die Anordnung aus hintereinandergeschalteten Axialventilatoren insofern mit deutlich reduzierter Drehzahl gegenüber einer Anordnung, bei der in Strömungsrichtung lediglich ein Ventilator vorgesehen ist, betreiben.

Zu erwähnen ist auch, dass durch das Vorsehen von Axialventilatoren die Gesamtbaulänge auch bei Vorsehen von zwei Ventilatoren nicht bzw. nicht merklich erhöht wird. Herkömmlicherweise werden Radialventilatoren eingesetzt, die meist über Keilriemengetriebe angetrieben werden, so dass die Baulänge einer derartigen herkömmlichen Anordnung mit nur einem Ventilator meist über der Baulänge der hier vorgeschlagenen Hintereinanderschaltung von zwei Axialventilatoren liegen dürfte.

Sofern über einen Querschnitt des Luftstroms verteilt mehrere Ventilatoren vorgesehen sind, so ist bevorzugtermaßen auch vorgesehen, dass alle über den Querschnitt verteilt angeordneten Ventilatoren selbst auch Bestandteil einer Hintereinanderschaltung von zwei oder mehr Ventilatoren sind.

Vorzugsweise sind die hintereinander angeordneten Ventilatoren in ihren Achsen fluchtend unabhängig angetrieben oder auf einer gemeinsamen Welle gemeinsam angetrieben.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

### Hierbei zeigen:

- Fig. 1: eine Gesamtanordnung einer herkömmlichen Klimatisierungseinrichtung nach dem Stand der Technik;
- Fig. 2: ein Ausführungsbeispiel einer Klimatisierungsanordnung nach der vorliegenden Erfindung;
- Fig. 3: eine abgewandelte Ausführungsform einer Klimatisierungseinrichtung nach der vorliegenden Erfindung;
- Fig. 4a: eine schematische Seitenansicht einer Ausführungsform eines Wärmetauschers in einer ersten Seitenansicht quer zum Luftstrom;
- Fig. 4b: eine schematische Draufsicht auf den Wärmetauscher nach Fig. 4a in Eintrittsrichtung des Luftstroms.

Bei der nachfolgenden Beschreibung werden für gleiche und gleich wirkende Teile dieselben Bezugsziffern verwendet.

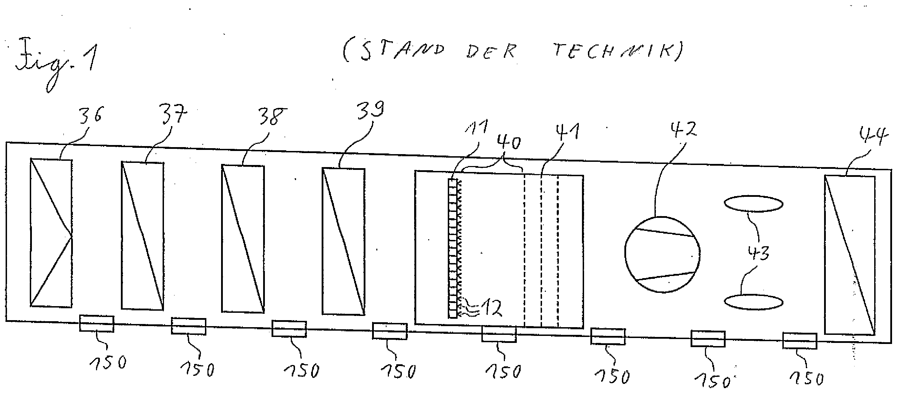

In Fig. 1 ist eine Gesamtanlage einer herkömmlichen Luftbefeuchtungseinrichtung veranschaulicht, die sich durch eine Vielzahl von Komponenten auszeichnet.

In Strömungsrichtung des Luftstroms betrachtet, ist eingangsseitig zunächst ein Filter 36 vorgesehen. Dem Filter 36 nachgeschaltet ist eine als Wärmerückgewinnungseinrichtung ausgebildete Vorlufterwämungseinrichtung 37. Mit der Vorlufterwärmungseinrichtung 37 kann Abwärme aus aus dem Raum abgeführter Abluft entnommen und auf den hier maßgeblichen Zuluftstrom übertragen werden. Da die als Wärmerückgewinnungseinrichtung ausgebildete Vorlufterwärmungseinrichtung 37 nicht ausreicht, um den Luftstrom auf Raumtemperatur bzw. im Hinblick auf die mit der Luftbefeuchtung auftretende Verdunstungsenthalpie darüber zu erhitzen, ist beim Stand der Technik weiterhin ein relativ groß dimensionierter Vorerhitzer 38 vorgesehen, der den Luftstrom auch im Winter mindestens auf Raumtemperatur bzw. im Hinblick auf die mit der anschließenden Befeuchtung entstehende Verdunstungsenthalpie auch darüber erwärmen muss. Der Vorerhitzer 38 muss insofern eine erhebliche Baulänge in Strömungsrichtung der Luft aufweisen. Darüber hinaus ist die Aufheizung des Vorerhitzers 38 energieintensiv.

Um auch einen gerade im Sommer oftmals erforderlichen Kühlbetrieb realisieren zu können, schließt sich an den Vorerhitzer 38 ein Kühlregister 39 an. Das Kühlregister 39 kann bedarfsweise zur Kühlung des Luftstroms mit Kühlfluid beschickt werden.

An das Kühlregister 39 schließt sich nun die eigentliche Luftbefeuchtungseinrichtung in Gestalt eines mit einer Vielzahl von Düsen 12 bestückten Düsenstocks 11 an. Mittels der Düsen 12 wird feinst vernebeltes Befeuchtungsfluid, insbesondere Wasser in dem bereits relativ hoch erwärmten Luftstrom eingebracht, so dass es über die vorgegebene Verdunstungsstrecke 40 verdunsten kann. Befeuchtungspartikel, die über die freie Verdunstungsstrecke 40 nicht verdunstet sind, werden in einem herkömmlichen Tropfenabscheider 41 aufgefangen. Ein Abtrocknen oder Entkeimen ist bei den herkömmlichen Luftbefeuchtungseinrichtungen nicht automatisch, das heißt anlagenseitig möglich, sondern müsste, was letztlich nicht erfolgt, manuell durchgeführt werden. Beim herkömmlichen Kühlregister 39 besteht weiterhin das Problem, dass dieses selbst, sowie der darunterliegende Boden nach entsprechendem Betrieb nass bzw. feucht sein kann, wobei diese Nässe bzw. Feuchtigkeit lange Zeit erhalten bleibt und so Bakterien- und Keimbildung zu befürchten stehen. Eine herkömmliche Ventilatoreneinheit 42 schließt sich an. Der Ventilatoreneinheit 42 nachgeschaltet sind Schalldämpfungseinrichtungen 43, um die erheblichen Geräuschemissionen der herkömmlichen Ventilatoreneinheit 42 abzumildern.

An die Ventilatoreneinheit 42 bzw. die Schalldämpfungseinrichtungen 43 schließt sich bei der herkömmlichen Anlage noch ein Nacherwärmer 44 an, der im Entfeuchtungsbetrieb den Luftstrom auf ein für ein gewünschtes Raumklima erforderliches Temperaturniveau nacherwärmt. Der herkömmliche Nacherwärmer 44 ist dabei innerhalb des Querschnitts des Luftkanals angeordnet und wird im Vollstromprinzip durchströmt.

Zwischen den einzelnen Komponenten im Kanal ist jeweils seitlich im Kanal eine Tür 150 angeordnet, um einen Wartungszugang zu den einzelnen Komponenten zu ermöglichen.

Die herkömmliche Ventilatoreneinheit 42 muss insgesamt eine erhebliche Leistung erbringen, da der Luftstrom alle genannten Komponenten durchdringen muss. Da die Komponenten seriell angeordnet sind, ist die Baulänge der Gesamtanlage erheblich. Sämtliche Einzelkomponenten sind wartungsintensiv. Um diese Wartung überhaupt durchführen zu können, müssen die Komponenten mindestens 600 mm beabstandet sein und dieser Zwischenraum mittels einer in der Kanallängswand vorgesehenen Tür für das Wartungspersonal betretbar sein. Auch das Vorsehen der Türen bzw. der Zugänglichkeit für das Wartungspersonal trägt zu der erheblichen Gesamtlänge sowie zu den erheblichen Herstellungs- und Montagekosten bei. Der Raumbedarf, also auch die umbaute Gebäudefläche zur Aufstellung der Anlage, ist beträchtlich.

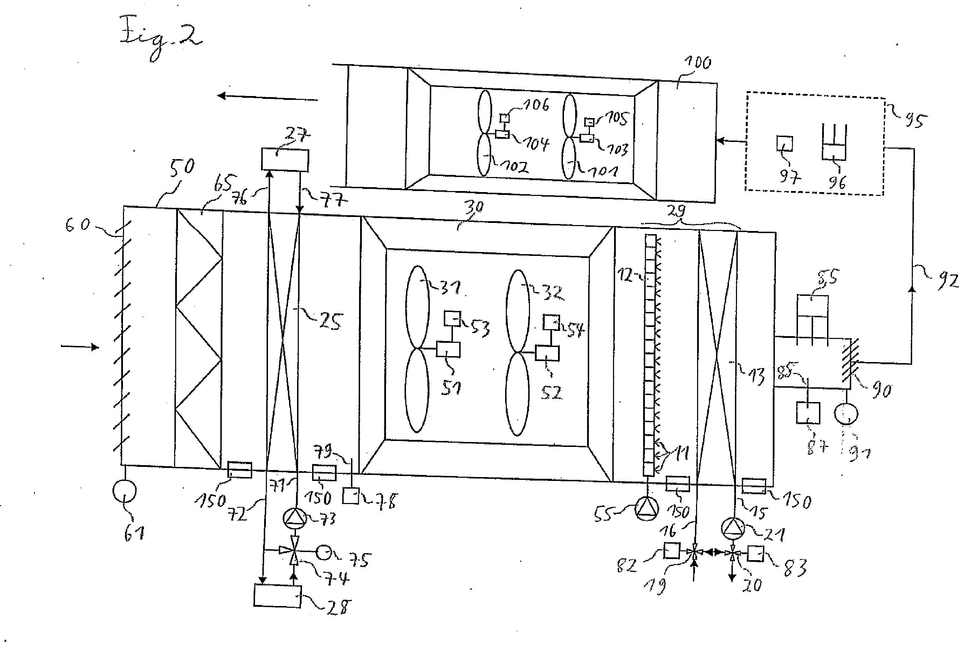

Mit den erfindungsgemäßen Überlegungen kann man Herstellungs- und Montagekosten sowie die angesprochene Baulänge erheblich reduzieren. Dabei löst sich die Erfindung von einer Reihe bestehender Vorurteile, wie bereits eingangs angesprochen. Ein mögliches Ausführungsbeispiel der vorliegenden Erfindung wird nachstehend unter Bezugnahme auf Fig. 2 näher erläutert.

Die erfindungsgemäße Klimatisierungseinrichtung ist in einen Luftkanal 50 eingebaut. Am Eingang des Luftkanals 50 ist eine Außenluftklappe 60 vorgesehen, die durch einen Motor 61 bewegt wird, wodurch der Öffnungsgrad des Luftkanals 50 verändert werden kann. Zwischen dem völlig geöffneten Zustand und dem völlig geschlossenen Zustand der Außenluftklappe 60 sind mehrere Zwischenzustände einstellbar. Durch die Außenluftklappe 60 kann im (teilweise) geöffneten Zustand Außenluft in den Luftkanal 50 eindringen.

Anschließend durchläuft die Außenluft einen Außenluftfilter 65 innerhalb des Luftkanals 50. Dieser Außenluftfilter 65 filtert die Luft, insbesondere von Schmutz in Form von Schwebstoffen sowie von allergenen Substanzen, beispielsweise von Pollen.

Hierauf folgend in Strömungsrichtung der Luft ist eine Vorlufterwärmungseinrichtung 25 vorgesehen. Beim Durchströmen der Luft durch diesen wird die Außenluft auf eine Mindesttemperatur von 5 °C bis 8 °C vorgewärmt, wenn die Außenlufttemperatur unter dieser Mindesttemperatur liegen sollte. Die Vorlufterwärmungseinrichtung 25 wird durch eine Zuleitung 71 mittels einer Pumpe 73 mit einem Wärmefluid, beispielsweise Warmwasser, aus einer Wärmefluidquelle 28 versorgt. Das Wärmefluid verlässt die Vorlufterwärmungseinrichtung 25 durch eine Ableitung 72. Wenn der Temperaturunterschied zwischen dem Wärmefluid und der gewünschten Mindesttemperatur sehr hoch, kann ein Teil des abgeleiteten Wärmefluids durch ein Dreiwegeventil 74, das durch einen Motor 75 gesteuert wird, direkt in die Vorlufterwärmungseinrichtung 25 rückgeführt werden. Hierzu steht die Ableitung 72 mit der Zuleitung 71 in Fluidkontakt über das Dreiwegeventil 74. Zusätzlich oder anstelle dieser Wärmefluidversorgung durch ein Heizregister 28 kann die Vorlufterwärmungseinrichtung 25 durch eine Zuleitung 76 ein erwärmtes Fluid, vorzugsweise Wasser, aus einer Wärmerückgewinnungseinrichtung 27 zugeführt werden. Das Fluid verlässt die Vorlufterwärmungseinrichtung 25 durch eine Ableitung 77. Anstelle der Wärmerückgewinnungseinrichtung 27 kann das Fluid auch aus einer Umluftbeimischeinrichtung zugeführt werden.

Die Vorlufterwärmungseinrichtung 25 ist nur notwendig, sofern die Anlage im Befeuchtungsbetrieb gefahren wird. Wird die Anlage in einem der anderen Betriebsmodi gefahren, muss die Vorlufterwämungseinrichtung nicht betrieben werden; ist ein Befeuchtungsbetrieb überhaupt nicht vorgesehen, ist es zweckmäßig, auf die Vorlufterwärmungseinrichtung 25 gänzlich zu verzichten, so dass die Baulänge weiter verkürzt, herstellungs- und Montagekosten eingespart sowie im Betrieb Energiekosten verringert werden können.

Als nächstes Bauelement in Richtung der Strömungsrichtung der Luft ist ein Feuchtigkeitssensor 78 vorgesehen, der über einen Fühler 79 die Feuchtigkeit der Luft im Luftkanal 50 misst. Mittels dieser Messung wird bestimmt, wie viel Befeuchtungsfluid der Luft in einem der nächsten Schritte zugeführt oder abgeführt werden muss, damit eine gewünschte Feuchtigkeit der Luft, die in den zu klimatisierenden Raum 95 geführt wird, erreicht wird.

Innerhalb des Luftkanals 50 ist als nächstes zentral eine Ausführungsform einer gemäß einem unabhängigen Aspekt der vorliegenden Erfindung beanspruchten Ventilatoreneinheit 30 angeordnet, die zwei in Strömungsrichtung hintereinander angeordnete Axialventilatoren 31, 32 umfasst. Die Axialventilatoren 31, 32 sind zueinander so angeordnet, dass Ihre Achsen fluchten; beide Axialventilatoren 31, 32 werden jedoch jeweils unabhängig von einem separaten Motor 51, 52 angetrieben, der jeweils mit einem Frequenzumwandler 53, 54 zusammenwirkt. Der Ventilatoreneinheit 30 strömungstechnisch nachgeschaltet ist ein Düsenstock 11, der mit einer Vielzahl von Düsen 12 bestückt ist. Über die Düsen 12 des Düsenstocks 11 lässt sich Befeuchtungsfluid, insbesondere Wasser in den Luftstrom einbringen. Hierfür ist eine Hochdruckpumpe 55 vorgesehen, die vorzugsweise in ihrer Förderleistung einstellbar ist, beispielsweise über einen Frequenzumformer. Insbesondere arbeitet die erfindungsgemäße Vorrichtung bzw. das erfindungsgemäße Verfahren mit dem Prinzip der Hochdruckzerstäubung von Wasser, das heißt es wird durch die Zerstäubung von Wasser unter hohem Druck ein Aerosolnebel erzeugt mit Tröpfchengrößen von deutlich unter 1 mm Durchmesser, wobei das erfindungsgemäße Prinzip auch bei größeren Tropfengrößen erhalten bleibt. Druckniveaus zur Beschickung der Düsen mit Befeuchtungsfluid liegen üblicherweise in einem Bereich von 10 bar bis 150 bar, wobei sich akzeptable Ergebnisse auch bei geringeren Drücken, das hießt 1,5 bar bis 10 bar erzielen lassen.

In Strömungsrichtung nachgeschaltet, ist ein Wärmetauscher 13 vorgesehen. Der Abstand zwischen Düsen 12 und Eintrittsseite des Wärmetauschers 13 kann beispielsweise lediglich 900 mm bis 400 mm, vorzugsweise lediglich etwa 600 mm betragen. Der Wärmetauscher 13 weist in Fig. 2 nicht gezeigte Luftströmungskanäle 14 sowie in Fig. 2 ebenfalls nicht gezeigte Temperierkanäle 17 auf. Der Luftstrom wird dabei durch die im Wesentlichen in Längserstreckung des Luftkanals 50 ausgerichteten Luftströmungskanäle 14 geführt. Die Temperierkanäle 17 können zu den Luftströmungskanälen beispielsweise orthogonal ausgerichtet sein. Die Temperierkanäle 17 lassen sich mit einem Wärmefluid oder Kältefluid beschicken.

Der Wärmetauscher 13 wird durch Anschlüsse 15, 16 mit einem Wärmefluid oder Kältefluid versorgt. Die Anschlüsse 15, 16 stehen über zwei Mischventile 19, 20, die durch jeweils einen Motor 82, 83 geöffnet bzw. geschlossen werden, in Fluidverbindung, so dass ein Teil des Fluids in einem Kreislauf direkt in den Wärmetauscher 13 zurückgeführt werden kann. Ein Rückführen eines Teil des Fluids direkt in den Wärmetauscher 13 ist insbesondere vorteilhaft, wenn der Unterschied zwischen der gewünschten Lufttemperatur und der Temperatur des Wärmefluids oder Kältefluids zu groß ist. Das Fluid wird mittels einer Wärmetauscherpumpe 21, die in einem der Anschlüsse 15, 16 angeordnet ist, dem Wärmetauscher 13 zugeführt. Der Düsenstock 11 und die Wärmetauscher 13 bilden ein vormontierbares Modul 29, welches im Sinne einer Luftkonditioniereinrichtung ausgebildet sein kann.

Nach Durchströmen des Wärmetauschers 13 wird durch einen weiteren Feuchtigkeitssensors 85 mittels eines Feuchtigkeitsfühlers 86 die Feuchtigkeit der Luft bestimmt. Ein Temperatursensor 87 mit einem Temperaturfühler 88 stellt die Temperatur der Luft fest. Durch die Messung dieser Werte kann die Klimatisierungseinrichtung insbesondere die Menge an Befeuchtungsfluid, die der Luft in dem Düsenstock 12 zugeführt wird, und die Wärme, die durch die Vorlufterwärmungseinrichtung 25 und dem Wärmetauscher 13 zugeführt wird, derart einstellen, dass eine gewünschte Temperatur und eine gewünschte Feuchtigkeit der Luft am Ende des Kanals 50 erreicht wird.

In Strömungsrichtung der Luft ist nachfolgend eine Zuluftklappe 90 angeordnet, die durch einen Motor 91 geöffnet oder geschossen werden kann. Zwischenzustände der Zuluftklappe 90, wie z.B. halb geöffnet, ein Viertel geöffnet etc., sind durch den Motor ebenfalls einstellbar. Durch eine Zuluftführung 92 wird die klimatisierte Luft dem zu klimatisierenden Raum 95 durch eine oder mehrere Öffnungen zugeführt. Der zu klimatisierende Raum 95 kann beispielsweise eine Montagehalle, ein Büroraum, eine Wohnung, ein Laborraum oder eine Lagerhalle sein. In dem zu klimatisierenden Raum 95 sind ein weiterer Feuchtigkeitssensor 96 und ein weiterer Temperatursensor 97 zur Einstellung, insbesondere Regelung bzw. Überwachung der Feuchtigkeit und der Lufttemperatur angeordnet. Bei größeren Räumen bietet es sich an, mehrere Feuchtigkeits- und Temperatursensoren über den Raum verteilt anzuordnen, damit lokale Feuchtigkeits- und Temperaturschwankungen der Luft im Raum 95 die Messungen weniger stark beeinflussen bzw. entsprechend ausgemittelt werden können.

Die Abluft des Raums 95 wird mittels einer Abluftventilatoreinheit 100 durch einen Abluftkanal 99 aus dem Raum abgesaugt. Die Abluftventilatoreinheit verfügt über zwei in Strömungsrichtung hintereinander angeordnete Axialventilatoren 101, 102. Die Axialventilatoren 101, 102 sind zueinander so angeordnet, dass Ihre Achsen fluchten; beide Axialventilatoren 101, 102 werden jedoch jeweils unabhängig von einem separaten Motor 103, 104 angetrieben, der jeweils mit einem Frequenzumwandler 105, 106 zusammenwirkt. Auch bei Hintereinanderschaltung von Axialventilatoren in der Abluft lässt sich eine deutliche Geräuschlimitierung erreichen, so dass auch hier das Prinzip der Hintereinanderschaltung der Axialventilatoren bevorzugt wird.

Die unabhängig erfinderische Idee der Hintereinanderschaltung von Axialventilatoren zur Beförderung eines Luftstroms wird ganz generell eigenständig beansprucht, und zwar unabhängig von der konkreten Einsatzsituation. Neben den hier konkret beschriebenen Einsatzsituationen, nämlich beispielsweise im Zuluftkanal einer Klimatisierungseinrichtung bzw. im Abluftkanal einer Klimatisierungseinrichtung, lässt sich das Prinzip der Hintereinanderschaltung von Axialventilatoren zur Beförderung eines Luftstroms auch dann einsetzen, wenn im Luftstrom andere Ziele als die Klimatisierung eines Raums verfolgt werden, beispielsweise die Kühlung bzw. Rückkühlung von Medien, die Einbringung von Luft in einen Fertigungsprozess, etc. Durch die Hintereinanderschaltung von Axialventilatoren addieren sich die von den Ventilatoren jeweils geleisteten Druckdifferenzen, so dass bei zwei Ventilatoren eine Druckerhöhung um den Faktor 2, bei Hintereinanderschaltung von beispielsweise drei Ventilatoren eine Druckerhöhung um den Faktor 3 mit entsprechender Erhöhung des Fördervolumens erzielbar ist. Gleichzeitig lässt sich in dieser Anordnung dann die Drehzahl der einzelnen Ventilatoren entsprechend gering halten, so dass der in vielen Anwendungsfällen maßgebliche Vorteil einer deutlichen Geräuschreduzierung erreicht wird. Darüber hinaus haben erste Versuche ergeben, dass sich die Güte des Luftstroms (Annäherung an einen möglichst laminaren Luftstrom) bei Hintereinanderschaltung von zwei oder drei Ventilatoren verbessern lässt.

Anschließend wird die Luft als sogenannte Fortluft nach außen in die Umwelt abgeführt. Vorstellbar ist auch, dass die Luft gefiltert wird, bevor sie in die Umwelt geleitet wird, um insbesondere für die Umwelt gefährliche und/oder schädliche Substanzen zu entfernen, die aus dem zu klimatisierenden Raum 95 stammen. Die Fortluft kann auch zur Wärmerückgewinnung beispielsweise mit der Wärmerückgewinnungseinrichtung 27 in Wärmekontakt stehen.

Zwischen dem Düsenstock 12 und dem Wärmetauscher 13 sowie direkt nach dem Wärmetauscher 13 ist jeweils seitlich im Kanal eine Tür 150 angeordnet. Hierdurch wird ein Wartungszugang zu dem Düsenstock 12 und dem Wärmetauscher 13 ermöglicht.

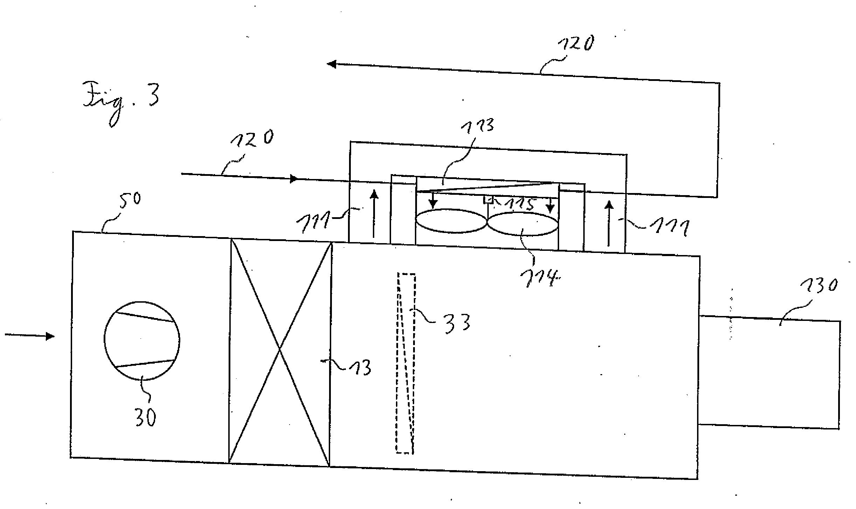

Fig. 3 zeigt einen Teil einer abgewandelten Ausführungsform einer Klimatisierungseinrichtung nach der vorliegenden Erfindung. In einem Luftkanal 50 ist eine Ventilatoreinheit 30 angeordnet, die einem Zuluftkanal 130 Außenluft zuführt. Dabei durchläuft die Außenluft nach Durchlaufen der Ventilatoreinheit 30 einen Wärmetauscher 13. In Strömungsrichtung der Luft ist in Fig. 3 dem Wärmetauscher nachfolgend eine Nachwärmeeinheit 33 gestrichelt eingezeichnet. Die Nachwärmeeinheit 33 wird zur Aufheizung bei einer notwendigen Entfeuchtung der Luft verwendet. Dies wird nur im Sommer für wenige Tage eingesetzt. Diese Anordnung der Nachwärmeeinheit 33 direkt im Kanal entspricht dem Stand der Technik. Bei der erfindungsgemäßen Vorrichtung, die in Fig. 3 mit durchgezogenen Linien dargestellt ist, ist die Nachwärmeeinheit nicht an dieser Stelle angeordnet.

Die Luft bzw. ein Teil davon wird bei der erfindungsgemäßen Vorrichtung durch Absaugkanäle 111 an einer oder mehreren Seiten des Luftkanals 50 seitlich abgeführt und einer Nachwärmeeinheit 113 zugeführt. Die abgeführte Luft wird durch einen Ventilator 114, der durch einen Motor 115 angetrieben wird, durch die Nachwärmeeinheit 113 gesogen und anschließend wieder dem Luftkanal 50 zugeführt. Durch diese Anordnung einer Nachwärmeeinheit 113 seitlich des eigentlichen Luftkanals 50 sinkt der Luftwiderstand im Kanal deutlich.

Die Nachwärmeeinheit 113 wird durch einen Fluidkanal 120 mit einem Wärmefluid versorgt bzw. dieses von der Nachwärmeeinheit weggeleitet. Das Fluid kann insbesondere Warmwasser, Warmwasser aus einer Wärmerückgewinnungseinrichtung oder Warmwasser, das als Kühlwasser einer Kältemaschine fungiert, sein.

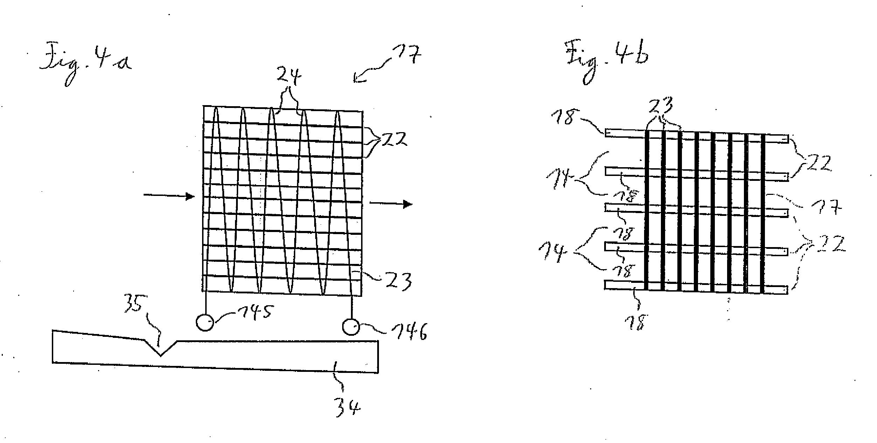

Fig. 4a zeigt eine schematische Seitenansicht einer Ausführungsform eines Wärmetauschers 13 in einer ersten Seitenansicht quer zum Luftstrom. Der Wärmetauscher 13 umfasst ein Wärmerohr 23, welches mittels Anschlüssen 145, 146 mit einem Wärmefluid oder Kältefluid versorgt wird. Die Luft durchströmt den in Fig. 4a gezeigten Temperierkanal 17 von links nach rechts. Das Wärmerohr 23 verläuft in dem gezeigten Temperierkanal 17 mäanderförmig und umfasst zehn Rohrabschnitte 24. Eine andere Anzahl von Rohrabschnitten 24 ist vorstellbar.

Fig. 4b zeigt eine schematische Draufsicht auf den Wärmetauscher 13 nach Fig. 4a in Eintrittsrichtung des Luftstroms. Die verschiedenen Luftströmungskanäle 14 werden durch Blechlagen 22 voneinander getrennt. Senkrecht zu den Blechlagen 22 bzw. Luftströmungskanälen 14 verlaufen eine Mehrzahl von Temperierkanälen bzw. Wärmerohren 23, von denen hier nur vier dargestellt sind. Die gezeigten Blechlagen 22 fungieren gleichzeitig als Tropfenabscheider 18. Unterhalb des Wärmetauschers 13 ist ein Boden 34 angeordnet. Der Boden 34 bildet eine Wasserablauffläche 45 aus. Der Boden 34 kann einstückig oder mehrstückig ausgebildet sein. Bevorzugterweise erstreckt sich der Boden 34 sowohl unterhalb des Wärmetauschers 13 als auch des Düsenstocks 11. Seine Wasserablauffläche 45 ist jeweils dem Düsenstock 12 bzw. Wärmetauscher 13 zugewandt, so dass Befeuchtungsfluid, Schwitzwasser oder im Entfeuchtungsbetrieb abgezogenes Wasser von der Wasserablauffläche 45 des Bodens 34 aufgefangen und einem Ablauf zugeführt wird, wobei der Ablauf beispielsweise als Ablaufrinne 35 ausgebildet sein kann.

Mit der erfindungsgemäßen Vorrichtung bzw. dem erfindungsgemäßen Verfahren lässt sich ein "Kombi-Klimatisierungsgerät" zumindest gemäß den als vorzugsweise angegebenen Ausgestaltungen erzielen: Es entfallen beim Stand der Technik übliche Vorerhitzer 38 komplett; auch das beim Stand der Technik separat ausgebildete Kühlregister 39 sowie das Vorsehen eines im Kanal den Luftstrom behinderten Nachwärmers 44 ist gemäß einer bevorzugten Ausgestaltung nicht länger notwendig. In Kombination mit der unabhängig beanspruchten Ventilatoreneinheit kann in den meisten Fällen darüber hinaus wohl auf Schalldämpfer verzichtet werden.

Es wird insofern eine Klimatisierungseinrichtung sowie ein entsprechendes Verfahren zum Konditionieren eines Luftstroms vorgeschlagen, mit denen sich erhebliche Einsparungen in Bezug auf die Herstellungs- und Betriebskosten, insbesondere die Energiekosten, aber auch eine damit verbundene bedeutsame CO-Emissionseinsparung erzielen lassen. Aufgrund der kompakten Baueinheit lassen sich die Reinigungskosten erheblich reduzieren, da letztendlich weniger Einzelkomponenten vorhanden sind, die zu reinigen sind.

Hinsichtlich der kürzeren Baulänge wird darauf hingewiesen, dass nicht nur Kosten in Bezug auf die Klimatisierungseinrichtung selbst, sondern auch hinsichtlich der Nutzung des umbauten Raums eingespart werden können.

### Bezugszeichenliste

- 11: Düsenstock
- 12: Düsen
- 13: Wärmetauscher/Luftkonditionierungseinrichtung
- 14: Luftströmungskanäle
- 15, 16: Anschlüsse
- 17: Temperierkanäle
- 18: Tropfenabscheider
- 19, 20: Mischventil
- 21: Wärmetauscherpumpe
- 22: Blechlagen
- 23: Rohre
- 24: Rohrabschnitte
- 25: Vorlufterwärmungseinrichtung
- 27: Wärmerückgewinnungseinrichtung
- 28: Wärmefluidquelle
- 29: Modul/Luftkonditionierungseinrichtung
- 30: Ventilatoreneinheit
- 31, 32: Axialventilatoren
- 33: Nachwärmeinrichtung
- 34: Boden
- 35: Ablaufrinne
- 36: Filter
- 37: Vorlufterwämungseinrichtung
- 38: Vorerhitzer
- 39: Kühlregister
- 40: Verdunstungsstrecke
- 41: Tropfenabscheider
- 42: Ventilatoreneinheit
- 43: Schalldämpfungseinrichtungen
- 44: Nacherwärmer
- 45: Wasserablauffläche
- 50: Luftkanal
- 51, 52: Motor (Ventilatoren)
- 53, 54: Frequenzumwandler (Ventilatoren)
- 55: Hochdruckpumpe
- 60: Außenluftklappe
- 61: Motor (Außenluftklappe)
- 65: Außenluftfilter
- 71: Zuleitung (Vorlufterwärmungseinrichtung)
- 72: Ableitung (Vorlufterwärmungseinrichtung)
- 73: Pumpe (Vorlufterwärmungseinrichtung)
- 74: Dreiwegeventil (Vorlufterwärmungseinrichtung)
- 75: Motor (Dreiwegeventil)
- 76: Zuleitung (Wärmerückgewinnungseinrichtung)
- 77: Zuleitung (Wärmerückgewinnungseinrichtung)
- 78: Feuchtigkeitssensor
- 79: Fühler (Feuchtigkeitssensor)
- 82: Motor (Mischventil 19)
- 83: Motor (Mischventil 20)
- 85: Feuchtigkeitssensor
- 86: Fühler (Feuchtigkeitssensor)
- 87: Temperatursensor
- 88: Fühler (Temperatursensor)
- 90: Zuluftklappe
- 91: Motor (Zuluftklappe)
- 92: Zuluftführung
- 95: Raum
- 96: Feuchtigkeitssensor (Raum)
- 97: Temperatursensor (Raum)
- 99: Abluftkanal
- 100: Abluftventilatoreinheit
- 101, 102: Axialventilatoren
- 103, 104: Motor (Axialventilatoren)
- 105, 106: Frequenzumwandler (Axialventilatoren)
- 111: Absaugkanal
- 113: Nachwärmeeinheit
- 114: Ventilator
- 115: Motor (Ventilator)
- 120: Fluidkanal
- 130: Zuluftkanal
- 145, 146: Wärmerohranschlüsse
- 150, 151: Tür

## Patentansprüche

1. Klimatisierungseinrichtung zum Konditionieren eines in einem Kanal geführten Luftstroms zur Klimatisierung eines Raumes, umfassend
- eine Ventilatoreneinheit (30)
- eine Luftkonditionierungseinrichtung (13) zum Verändern der physikalischen Parameter der Luft, nämlich der Temperatur (T) und/oder Feuchte (H),
- wobei die Luftkonditionierungseinrichtung (13) zum einen vom Luftstrom durchströmbar ausgebildet ist und hierzu eine Vielzahl von Luftströmungskanälen (14) aufweist, wobei die Luftströmungskanäle (14) durch parallel zueinander angeordnete Blechlagen (22) definiert sind, die jeweils parallel zur Strömungsrichtung des Luftstroms ausgerichtet sind und zum Anderen Wärme- oder Kälteübertragungsmittel (17) aufweist zur Beaufschlagung der Luftströmungskanäle (14) mit Wärme oder Kälte,
wobei die Luftkonditionierungseinrichtung (13) als zusammenhängendes Bauteil zum multifunktionalen Betrieb ausgebildet ist und der multifunktionale Betrieb mindestens einen Wärmeabfuhr-Betriebszustand umfasst, beispielsweise- Abkühlung des Luftstroms (Kühlbetrieb) und/oder- Entfeuchtung des Luftstroms (Entfeuchtungsbetrieb), umfasst, wobei der Luftkonditionierungseinrichtung (13) entgegen der Strömungsrichtung um eine freie Befeuchtungsstrecke beabstandet ein Düsenstock (11) mit einer Mehrzahl von über den Querschnitt des Kanals verteilt angeordneter mit Druckwasser beaufschlagter Düsen (12) zur Abgabe von Wasser, insbesondere in Form eines Sprühnebels, vorgeschaltet angeordnet ist,
**dadurch gekennzeichnet, dass**
der multifunktionale Betrieb mindestens einen Wärmezufuhr-Betriebszustand, der einen Entkeimungsbetrieb mittels Abtrocknung befeuchteter oder nasser Flächen umfasst,
wobei die Luftkonditionierungseinrichtung (13) auf eine Entkeimungstemperatur zur Abtrocknung der Luftkonditionierungseinrichtung (13) erhitzbar ist
und die Ventilatoreneinheit (30) dazu ausgebildet ist, in einem Betriebsmodus die durch den Entkeimungsschritt befeuchtete Luft in den Raum auszublasen und in einem umgepolten Betriebsmodus der Ventilatoreneinheit (30) die feuchte Luft entgegen der normalen Fließrichtung des Luftstroms aus dem Gebäude auszutragen,
und, zusätzlich beispielsweise
- Nachverdunstung von im Luftstrom mitgerissener Befeuchtungspartikel (Befeuchtungsbetrieb) und/oder
- Aufheizen des Luftstroms (Heizbetrieb)

2. Klimatisierungseinrichtung nach Anspruch 1,
**dadurch gekennzeichnet, dass**
die Luftkonditionierungseinrichtung (13) einen Wärmetauscher umfasst.

3. Klimatisierungseinrichtung nach Anspruch 1 oder 2,
**dadurch gekennzeichnet, dass**
die Luftkonditionierungseinrichtung (13) einen Befeuchtungsabschnitt umfasst, welcher zur Luftstrombefeuchtung auf Grundlage von Sprühbefeuchtung oder von Verdunstungsbefeuchtung ausgebildet ist.

4. Klimatisierungseinrichtung nach einem der vorhergehenden Ansprüche,
**dadurch gekennzeichnet, dass**
der Entkeimungsbetrieb in festgelegten Intervallen ausführbar ist, wobei ein Wärmefluid, mit dem die Luftkonditionierungseinrichtung (13) bzw. der Wärmetauscher während des Entkeimungsschritts beschickt wird, eine Temperatur von 80°C, insbesondere über einen Zeitraum von 10 bis 15 Minuten, aufweist.

5. Klimatisierungseinrichtung nach einem der vorhergehenden Ansprüche,
**dadurch gekennzeichnet, dass**
die Luftbefeuchtungseinrichtung mindestens zum Entfeuchten des Luftstroms (Entfeuchtungsbetrieb) und/oder zur Abkühlung des Luftstroms (Kühlbetrieb) sowie gleichzeitig zur Austrocknung befeuchteter oder nasser Flächen (Entkeimungsbetrieb) ausgebildet ist, um im Kühlbetrieb bzw. im Entfeuchtungsbetrieb gegebene feuchte bzw. nasse Flächen an der Luftkonditionierungseinrichtung (13) selbst bzw. in ihrem Umfeld, insbesondere eine zugeordnete Wasserablauffläche (45) trocknen zu können.

6. Klimatisierungseinrichtung nach einem der vorhergehenden Ansprüche,
**dadurch gekennzeichnet, dass**
eine Wasserablauffläche (45) derart mit der Luftkonditionierungseinrichtung (13) zusammenwirkt, dass im Entkeimungsbetrieb die Wasserablauffläche (45) abgetrocknet wird.

7. Klimatisierungseinrichtung nach Anspruch 6,
**dadurch gekennzeichnet, dass**
die Wasserablauffläche (45) sich sowohl unterhalb der Luftkonditionierungseinrichtung (13) als auch unterhalb des Düsenstocks (14) erstreckt und ein- oder mehrteilig zusammenhängend ausgebildet ist.

8. Klimatisierungseinrichtung nach einem der vorhergehenden Ansprüche,
**dadurch gekennzeichnet, dass**
die Luftströmungskanäle (14) thermisch leitendes Material mit einem Leitfähigkeitskoeffizienten von wenigstens 50 W/(m·K), insbesondere Kupfer und/oder Aluminium umfassen.

9. Klimatisierungseinrichtung nach einem der vorhergehenden Ansprüche,
**dadurch gekennzeichnet, dass**
die Kontaktflächen der Luftströmungskanäle (14) zum Wärmeaustausch mit dem Luftstrom ausreichend groß sind, um eine Kühlung eines Luftstroms vorbestimmter relativer Feuchte auch bei Temperaturen des Kühlfluids oberhalb des Taupunktes gewährleisten zu können.

10. Klimatisierungseinrichtung nach einem der vorhergehenden Ansprüche,
**dadurch gekennzeichnet, dass**
die Klimatisierungseinrichtung weiterhin eine dem Düsenstock (11) vorgelagerte Vorlufterwärmungseinrichtung (25), insbesondere eine Umluftbeimischeinrichtung (26), eine Wärmerückgewinnungseinrichtung (27) oder ein anderweitig aufheizbares Heizregister zur bedarfsweisen Vorerwärmung des Luftstroms umfasst.

11. Klimatisierungseinrichtung nach einem der vorhergehenden Ansprüche,
**dadurch gekennzeichnet, dass**
abstromseitig des Wärmetauschers (13) eine Nachwärmeinrichtung (33) angeordnet ist zur bedarfsweisen Nacherwärmung des Luftstroms, insbesondere im Entfeuchtungsbetrieb.

12. Klimatisierungseinrichtung nach Anspruch 11,
**dadurch gekennzeichnet, dass**
die Nachwärmeinrichtung (33) zur Montage außerhalb des Kanals, insbesondere im Teilstromprinzip, also parallel zum im Kanal geführten Hauptstrom, ausgebildet ist.

13. Verfahren zum Konditionieren eines in einem Kanal geführten Luftstroms zur Klimatisierung eines Raums,
wobei der Luftstrom innerhalb einer Luftkonditionierungseinrichtung (13) in seinen physikalischen Parametern, nämlich hinsichtlich der Temperatur (T) und/oder hinsichtlich der Feuchte (A) verhindert wird,
wobei sich die Luftkonditionierungseinrichtung (13) in verschiedenen auswählbaren Betriebszuständen betreiben lässt, wobei ein Betrieb mindestens einen Wärmezufuhr-Betriebszustand, in dem dem Luftstrom Wärme zugeführt wird und mindestens einen Wärmeabfuhr-Betriebszustand, in dem dem Luftstrom Wärme entnommen wird, umfasst,
wobei der Wärmezufuhr-Betriebszustand einen Entkeimungsbetrieb mittels Abtrocknung befeuchteter oder nasser Flächen umfasst, wobei die Luftkonditionierungseinrichtung (13) auf eine Entkeimungstemperatur zur Abtrocknung der Luftkonditionierungseinrichtung (13) erhitzt wird und mittels einer Ventilatoreneinheit (30) die in einem Betriebsmodus durch den Entkeimungsschritt befeuchtete Luft in den Raum ausgeblasen und in einem umgepolten Betriebsmodus der Ventilatoreneinheit (30), die feuchte Luft entgegen der normalen Fließrichtung des Luftstroms aus dem Gebäude ausgetragen wird, und zusätzlich beispielsweise
- Nachverdunstung von im Luftstrom mitgerissener Befeuchtungspartikel (Befeuchtungsbetrieb) und/oder
- Aufheizen des Luftstroms (Heizbetrieb)
und der Wärmeabfuhr-Betriebszustand beispielsweise die Betriebsfunktionen
- Abkühlung des Luftstroms (Kühlbetrieb) und/oder
- Entfeuchtung des Luftstroms (Entfeuchtungsbetrieb) umfasst.

14. Verfahren nach einem der Anspruch 13,
**dadurch gekennzeichnet, dass**
die Aufheizung in einem Wärmetauscher (13) vorgenommen wird, der gleichzeitig als Tropfenabscheider (18) wirkt.

15. Verfahren nach einem der Ansprüche 13 oder 14,
**dadurch gekennzeichnet, dass**
im Entfeuchtungsbetrieb der entfeuchtete Luftstrom im Vollstrom oder im Teilstrom nacherwärmt wird.

16. Verfahren nach einem der Ansprüche 13 bis 15,
**dadurch gekennzeichnet, dass**
der Entkeimungsbetrieb in festgelegten Intervallen ausführbar ist, wobei während eines Entkeimungsschritts die Luftkonditionierungseinrichtung (13) bzw. der Wärmetauscher mit einem Wärmefluid beschickt wird, wobei das Wärmefluid eine Temperatur von 80°C, insbesondere über einen Zeitraum von 10 bis 15 Minuten, aufweist.

17. Verfahren nach einem der Ansprüche 13 bis 16,
**dadurch gekennzeichnet, dass**
die Eingangstemperatur des Luftstroms vor der Luftkonditionierungseinrichtung (13) auf einem Mindesttemperaturniveau von z. B. 5° bis 8° gehalten wird, und die Mindesttemperatur von z. B. 5° bis 8° im Winter durch eine oder eine Kombination der folgenden Maßnahmen erzielt wird:
- Nutzung der Abwärme der Ventilatoren
- Wärmerückgewinnung aus der das Gebäude verlassenden Abluft oder aus anderweitig anfallender Abwärme
- Beimischung von Umluft
- Aufheizung durch ein Heizregister.

18. Verfahren nach einem der Ansprüche 13 bis 17,
**dadurch gekennzeichnet, dass**
in einem Entkeimungsschritt bei reduzierter oder abgeschalteter Luftströmung die Luftkonditionierungseinrichtung (13) auf eine Entkeimungstemperatur zur Abtrocknung der Luftkonditionierungseinrichtung (13), vorzugsweise auch eines unter der Luftkonditionierungseinrichtung (13) angeordneten Bodens (34) und/oder einer Ablaufrinne (35) erhitzt wird.

## Claims

1. Air conditioning system for conditioning an air flow guided in a duct for the air conditioning of a room, comprising
- a fan unit (30),
- an air conditioning device (13) for varying the physical parameters of the air, namely temperature (T) and/or humidity (H),
- wherein the air conditioning device (13) is designed, on the one hand, so that the air flow can flow through it and, for this purpose, comprises a plurality of air-flow ducts (14), wherein the air-flow ducts (14) are defined by sheet-metal layers (22) which are arranged parallel to one another and are in each case aligned parallel to the flow direction of the air flow, and, on the other hand, comprises heat- or cold-transfer means (17) for applying heat or cold to the air-flow ducts (14), wherein the air conditioning device (13) is designed as a contiguous component for multifunctional operation and the multifunctional operation comprises at least one heat dissipation operating state, e.g. cooling of the air flow (cooling operation) and/or dehumidification of the air flow (dehumidifying operation), wherein a nozzle assembly (11) having a plurality of nozzles (12), which are arranged distributed over the cross-section of the duct and are acted upon by pressurized water, for the delivery of water, in particular in the form of a spray mist, is arranged upstream of the air conditioning device (13) at a spacing opposite the direction of flow by a free humidifying section,
**characterized in that**
the multifunctional operation comprises at least one heat supply operating mode including a sterilization operation by means of drying humidified or wet surfaces,
wherein the air conditioning device (13) is heatable to a sterilization temperature for drying the air conditioning device (13),
and the fan unit (30) is adapted, in one operating mode, to discharge the air humidified by the sterilization step into the room and, in a reversed operating mode of the fan unit (30), to discharge the humid air out of the building against the normal direction of flow of the air flow,
and, additionally, for example
- post-evaporation of humidifying particles entrained in the air flow (humidifying operation) and/or
- heating up the air flow (heating operation).

2. Air conditioning system according to claim 1, **characterized in that** the air conditioning device (13) comprises a heat exchanger.

3. Air conditioning system according to claim 1 or 2, **characterized in that** the air conditioning device (13) comprises a humidifying section adapted for air flow humidification based on spray humidification or evaporative humidification.

4. Air conditioning system according to one of the preceding claims, **characterized in that** the sterilization operation is executable at fixed intervals, wherein a heat fluid, with which the air conditioning device (13) or the heat exchanger is charged during the sterilization step, has a temperature of 80°C, in particular over a period of 10 to 15 minutes.

5. Air conditioning system according to one of the preceding claims, **characterized in that** the air humidifying device is designed at least for dehumidifying the air flow (dehumidifying operation) and/or for cooling the air flow (cooling operation) and at the same time for drying humidified or wet surfaces (sterilization operation), in order to be able to dry humid or wet surfaces present in the cooling operation or in the dehumidifying operation on the air conditioning device (13) itself or in its environment, in particular an associated water drainage surface (45).

6. Air conditioning system according to one of the preceding claims, **characterized in that** a water drainage surface (45) cooperates with the air conditioning device (13) in such a way that, in the sterilization operation, the water drainage surface (45) is dried.

7. Air conditioning system according to claim 6, **characterized in that** the water drainage surface (45) extends both below the air conditioning device (13) and below the nozzle assembly (14) and is designed to be contiguous in one or more parts.

8. Air conditioning system according to one of the preceding claims, **characterized in that** the air-flow ducts (14) comprise thermally conductive material with a conductivity coefficient of at least 50 W/(m·K), in particular copper and/or aluminum.

9. Air conditioning system according to one of the preceding claims, **characterized in that** the contact surfaces of the air-flow ducts (14) are sufficiently large for heat exchange with the air flow so as to be able to ensure cooling of an air flow of predetermined relative humidity even at temperatures of the cooling fluid above the dew point.

10. Air conditioning system according to one of the preceding claims, **characterized in that** the air conditioning system further comprises a pre-air heating device (25), in particular a circulating air mixing device (26), a heat recovery device (27) or a heating register which can be heated in some other way, upstream of the nozzle assembly (11) for pre-heating the air flow as required.

11. Air conditioning system according to one of the preceding claims, **characterized in that** a reheating device (33) is arranged on the downstream side of the heat exchanger (13) for reheating the air flow as required, in particular in dehumidifying operation.

12. Air conditioning system according to claim 11, **characterized in that** the reheating device (33) is designed for mounting outside the duct, in particular in the partial flow principle, i.e. parallel to the main flow guided in the duct.

13. Method for conditioning an air flow guided in a duct for air conditioning a room, wherein the air flow is prevented within an air conditioning device (13) in its physical parameters, namely with regard to temperature (T) and/or with regard to humidity (A),
wherein the air conditioning device (13) can be operated in different selectable operating states, wherein an operation comprises at least one heat supply operating state in which heat is supplied to the air flow and at least one heat removal operating state in which heat is removed from the air flow, wherein the heat supply operating condition comprises a sterilization operation by means of drying humidified or wet surfaces, wherein the air conditioning device (13) is heated to a sterilization temperature for drying the air conditioning device (13), and by means of a fan unit (30) the air humidified in one operating mode by the sterilization step is blown out into the room, and in a reversed operating mode of the fan unit (30), the humid air is discharged from the building against the normal flow direction of the air flow, and in addition, for example,
- post-evaporation of humidifying particles entrained in the air flow (humidifying operation) and/or
- heating up the air flow (heating operation)
and the heat removal operating state, for example, comprises the operating functions of
- cooling of the air flow (cooling operation) and/or
- dehumidification of the air flow (dehumidifying operation).

14. Method according to one of claim 13, **characterized in that** the heating is carried out in a heat exchanger (13) which simultaneously acts as a droplet separator (18).

15. Method according to one of claims 13 or 14, **characterized in that** in the dehumidifying operation the dehumidified air flow is reheated in the full flow or in the partial flow.

16. Method according to one of claims 13 to 15, **characterized in that** the sterilization operation is executable at fixed intervals, wherein during a sterilization step the air conditioning device (13) or the heat exchanger is charged with a heat fluid, wherein the heat fluid has a temperature of 80°C, in particular over a period of 10 to 15 minutes.

17. Method according to one of claims 13 to 16, **characterized in that** the inlet temperature of the air flow upstream of the air conditioning device (13) is maintained at a minimum temperature level of, for example, 5° to 8°, and the minimum temperature of, for example, 5° to 8° in winter is achieved by one or a combination of the following measures:
- utilization of the waste heat from the fans,
- heat recovery from the exhaust air leaving the building or from waste heat generated elsewhere,
- admixture of circulating air,
- heating by means of a heating register.

18. Method according to one of claims 13 to 17, **characterized in that** in a sterilization step, with the air flow reduced or switched off, the air conditioning device (13) is heated to a sterilization temperature for drying the air conditioning device (13), preferably also a floor (34) arranged under the air conditioning device (13) and/or a drain channel (35).

## Revendications

1. Dispositif de climatisation pour le conditionnement d'un flux d'air guidé dans un conduit pour la climatisation d'une pièce, comprenant :
- une unité de ventilateurs (30),
- un dispositif de conditionnement d'air (13) pour modifier les paramètres physiques de l'air, à savoir la température (T) et/ou l'humidité (H),
- dans lequel le dispositif de conditionnement d'air (13) est conçu, d'une part, de manière à pouvoir être traversé par le flux d'air et présente à cet effet une pluralité de conduits d'écoulement d'air (14), les conduits d'écoulement d'air (14) étant définis par des couches de tôle (22) disposées parallèlement les unes aux autres et orientées chacune parallèlement à la direction d'écoulement du flux d'air et, d'autre part, présente des moyens de transmission de chaleur ou de froid (17) pour soumettre les conduits d'écoulement d'air (14) à de la chaleur ou à du froid,
dans lequel le dispositif de conditionnement d'air (13) est conçu comme un composant continu pour un fonctionnement multifonctionnel et le fonctionnement multifonctionnel comprend au moins un état de fonctionnement en dissipation de chaleur, par exemple refroidissement du flux d'air (mode refroidissement) et/ou déshumidification du flux d'air (mode déshumidification), dans lequel une rampe de buses (11) avec une pluralité de buses (12) réparties sur la section transversale du conduit et soumises à de l'eau sous pression pour délivrer de l'eau, en particulier sous la forme d'un brouillard de pulvérisation, est disposée en amont du dispositif de conditionnement d'air (13) et en est espacée d'une distance d'humidification libre à l'encontre de la direction d'écoulement,
**caractérisé en ce**
**que** le fonctionnement multifonctionnel comprend au moins un état de fonctionnement en apport de chaleur qui comprend un mode stérilisation par séchage de surfaces humidifiées ou mouillées,
dans lequel le dispositif de conditionnement d'air (13) peut être chauffé à une température de stérilisation pour sécher le dispositif de conditionnement d'air (13) et l'unité de ventilateurs (30) est conçue pour, dans un mode de fonctionnement, souffler l'air humidifié par l'étape de stérilisation dans la pièce et, dans un mode de fonctionnement inversé de l'unité de ventilateurs (30), pour évacuer l'air humide du bâtiment à l'encontre de la direction d'écoulement normale du flux d'air,
et comprend en plus, par exemple,
- post-évaporation de particules d'humidification entraînées dans le flux d'air (mode humidification) et/ou
- chauffage du flux d'air (mode chauffage).

2. Dispositif de climatisation selon la revendication 1,
**caractérisé en ce**
**que** le dispositif de conditionnement d'air (13) comprend un échangeur de chaleur.

3. Dispositif de climatisation selon la revendication 1 ou 2,
**caractérisé en ce**
**que** le dispositif de conditionnement d'air (13) comprend une section d'humidification qui est conçue pour humidifier le flux d'air sur la base d'une humidification par pulvérisation ou d'une humidification par évaporation.

4. Dispositif de climatisation selon l'une des revendications précédentes,
**caractérisé en ce**
**que** le mode stérilisation peut être exécuté à intervalles définis, un fluide de chauffage avec lequel le dispositif de conditionnement d'air (13) ou l'échangeur de chaleur est chargé pendant l'étape de stérilisation présentant une température de 80 °C, en particulier sur une période de 10 à 15 minutes.

5. Dispositif de climatisation selon l'une des revendications précédentes,
**caractérisé en ce**
**que** le dispositif d'humidification d'air est conçu au moins pour déshumidifier le flux d'air (mode déshumidification) et/ou pour refroidir le flux d'air (mode refroidissement) ainsi que, en même temps, pour sécher des surfaces humidifiées ou mouillées (mode stérilisation) afin de pouvoir sécher des surfaces humides ou mouillées présentes en mode refroidissement ou en mode déshumidification sur le dispositif de conditionnement d'air (13) lui-même ou dans son environnement, en particulier une surface de sortie d'eau (45) associée.

6. Dispositif de climatisation selon l'une des revendications précédentes,
**caractérisé en ce**
**qu'**une surface de sortie d'eau (45) coopère avec le dispositif de conditionnement d'air (13) de telle sorte que la surface de sortie d'eau (45) soit séchée en mode stérilisation.

7. Dispositif de conditionnement d'air selon la revendication 6,
**caractérisé en ce**
**que** la surface de sortie d'eau (45) s'étend à la fois sous le dispositif de conditionnement d'air (13) et sous la rampe de buses (14) et est conçue continue en une ou plusieurs parties.

8. Dispositif de climatisation selon l'une des revendications précédentes,
**caractérisé en ce**
**que** les conduits d'écoulement d'air (14) sont constitués d'un matériau thermiquement conducteur ayant un coefficient de conductivité d'au moins 50 W/(m·K), en particulier de cuivre et/ou d'aluminium.

9. Dispositif de climatisation selon l'une des revendications précédentes,
**caractérisé en ce**
**que** les surfaces de contact des conduits d'écoulement d'air (14) pour l'échange thermique avec le flux d'air sont suffisamment grandes pour pouvoir assurer un refroidissement d'un flux d'air d'une humidité relative prédéterminée même à des températures du fluide de refroidissement supérieures au point de rosée.

10. Dispositif de climatisation selon l'une des revendications précédentes,
**caractérisé en ce**
**que** le dispositif de climatisation comprend en outre un dispositif de préchauffage d'air (25), en particulier un dispositif de mélange d'air de reprise (26), un dispositif de récupération de chaleur (27) ou une batterie de chauffage pouvant être chauffée d'une autre manière, disposé en amont de la rampe de buses (11) pour préchauffer le flux d'air en fonction des besoins.

11. Dispositif de climatisation selon l'une des revendications précédentes,
**caractérisé en ce**
**qu'**un dispositif de réchauffage (33) est disposé en aval de l'échangeur de chaleur (13) pour réchauffer le flux d'air en fonction des besoins, en particulier en mode déshumidification.

12. Dispositif de climatisation selon la revendication 11,
**caractérisé en ce**
**que** le dispositif de réchauffage (33) est conçu pour être monté à l'extérieur du conduit, en particulier selon le principe du flux partiel, c'est-à-dire parallèlement au flux principal guidé dans le conduit.

13. Procédé de conditionnement d'un flux d'air guidé dans un conduit pour la climatisation d'une pièce,
dans lequel le flux d'air à l'intérieur d'un dispositif de conditionnement d'air (13) est modifié dans ses paramètres physiques, à savoir en ce qui concerne la température (T) et/ou en ce qui concerne l'humidité (A),
dans lequel le dispositif de conditionnement d'air (13) peut fonctionner dans différents états de fonctionnement sélectionnables, un fonctionnement comprenant au moins un état de fonctionnement en apport de chaleur dans lequel de la chaleur est apportée au flux d'air et au moins un état de fonctionnement en dissipation de chaleur dans lequel de la chaleur est prélevée du flux d'air,
dans lequel l'état de fonctionnement en apport de chaleur comprend un mode stérilisation par séchage de surfaces humidifiées ou mouillées, dans lequel le dispositif de conditionnement d'air (13) est chauffé à une température de stérilisation pour sécher le dispositif de conditionnement d'air (13) et, au moyen d'une unité de ventilateurs (30), l'air humidifié dans un mode de fonctionnement par l'étape de stérilisation est soufflé dans la pièce et, dans un mode de fonctionnement inversé de l'unité de ventilateurs (30), l'air humide est évacué du bâtiment à l'encontre de la direction d'écoulement normale du flux d'air,
et comprend en plus, par exemple,
- post-évaporation de particules d'humidification entraînées dans le flux d'air (mode humidification) et/ou
- chauffage du flux d'air (mode chauffage) et l'état de fonctionnement en dissipation de chaleur comprend, par exemple, les fonctions suivantes :
- refroidissement du flux d'air (mode refroidissement) et/ou
- déshumidification du flux d'air (mode déshumidification).

14. Procédé selon l'une des revendications 13,
**caractérisé en ce**
**que** le chauffage est réalisé dans un échangeur de chaleur (13) qui agit en même temps comme séparateur de gouttelettes (18) .

15. Procédé selon l'une des revendications 13 ou 14,
**caractérisé en ce**
**que**, en mode déshumidification, le flux d'air déshumidifié est réchauffé en flux total ou en flux partiel.

16. Procédé selon l'une des revendications 13 à 15,
**caractérisé en ce**
**que** le mode stérilisation peut être exécuté à intervalles fixes, le dispositif de conditionnement d'air (13) ou l'échangeur de chaleur étant chargé, pendant une étape de stérilisation, avec un fluide de chauffage, le fluide de chauffage présentant une température de 80 °C, en particulier sur une période de 10 à 15 minutes.

17. Procédé selon l'une des revendications 13 à 16,
**caractérisé en ce**
**que** la température d'entrée du flux d'air en amont du dispositif de conditionnement d'air (13) est maintenue à un niveau de température minimal de, par exemple, 5° à 8°, et la température minimale de, par exemple, 5° à 8° est obtenue en hiver par une ou une combinaison des mesures suivantes :
- utilisation de la chaleur perdue des ventilateurs
- récupération de chaleur de l'air sortant du bâtiment ou d'une chaleur perdue produite par ailleurs
- mélange d'air de reprise
- chauffage par une batterie de chauffage.

18. Procédé selon l'une des revendications 13 à 17,
**caractérisé en ce**
**que**, dans une étape de stérilisation, l'écoulement d'air étant réduit ou arrêté, le dispositif de conditionnement d'air (13) est chauffé à une température de stérilisation pour sécher le dispositif de conditionnement d'air (13), de préférence également un fond (34) disposé sous le dispositif de conditionnement d'air (13) et/ou une rigole d'évacuation (35) .
